# FASCICULE DE BREVET EUROPEEN

(11) **EP 0 618 334 B1**
(45) Date de publication et mention de la délivrance du brevet: **26.05.1999**
(21) Numéro de dépôt: 94420101.1
(22) Date de dépôt: 24.03.1994
(51) Int. Cl.: E02F 9/28, F16B 3/00

(54) **Dispositif et procédé de liaison entre des pièces d'usure aux extrémités d'outils et réceptacles en usage sur les engins de travaux public**
Vorrichtung und Verfahren zur Kupplung von Verschleissteilen an Arbeitsgeräte einer Erdbewegungsmachine
Device and method for coupling wear parts to implement borders for earth moving machines

(30) Priorité: 29.03.1993 FR 9304013
(43) Date de publication de la demande: 05.10.1994
(73) Titulaire: Pasqualini, Charles, F-42110 Feurs (FR); Pasqualini, Jean Marc, F-69440 Mornant (FR); Pasqualini, Sylvain, F-62380 Lumbres (FR); AFE METAL (Société Anonyme), F-42110 Feurs (FR)
(72) Inventeur: Pasqualini, Charles, F-42110 Feurs (FR); Pasqualini, Jean Marc, F69440 Mornant (FR); Pasqualini, Sylvain, F-62380 Lumbres (FR)
(74) Mandataire: Dupuis, François

(56) Documents cités:
- DE-A- 3 538 156
- FR-A- 2 072 357
- FR-A- 2 204 741
- GB-A- 2 025 557
- US-A- 3 256 622
- US-A- 3 330 055
- US-A- 3 707 788
- US-A- 4 470 210
- DATABASE WPI Week 7534, Derwent Publications Ltd., London, GB; AN 75-J5535W & SU-A-449 133 (UKRNIIPROEKT COAL) 15 Novembre 1974

## Description

L'invention se rattache aux secteurs techniques des équipements d'engins de travaux publics présentant des bennes, godets ou autres réceptacles susceptibles de venir râcler, prélever, des matériaux ou autres, en vue de leur évacuation d'un lieu donné vers d'autres postes opératoires, à l'aide d'engins de travaux publics.

Il est bien connu, selon l'art antérieur, de disposer sur les godets, réceptacles ou similaires, d'engins de travaux publics, des nez adapteurs, conformés, qui sont susceptibles de recevoir des dents amovibles au profil complémentaire. Ces dents sont directement en contact avec les matériaux, matières à prélever, râcler, et sont par conséquent source d'une usure rapide due à leurs contraintes d'usage. Les nez adapteurs formés sur les godets ou réceptacles sont des pièces mâles solidaires de la lèvre du godet ou réceptacle préformé, et sont réalisés de manière rapportée ou monobloc, lors de la conformation du godet ou réceptacle.

Les dents qui sont rapportées constituent des pièces femelles établies aux formes complémentaires des profils du ou des nez adapteurs, pour s'y engager dessus.

L'exigence de changement des dents, pour tenir compte de leur usure, requiert une liaison entre lesdites pièces d'usure, ou dents, et le nez adapteur correspondant. Cette liaison est, selon la technique antérieure proposée par de très nombreux constructeurs sous la forme d'un clavetage qui peut être soit métallique, soit mixte en intégrant une fonction de flexibilité par un matériau souple.

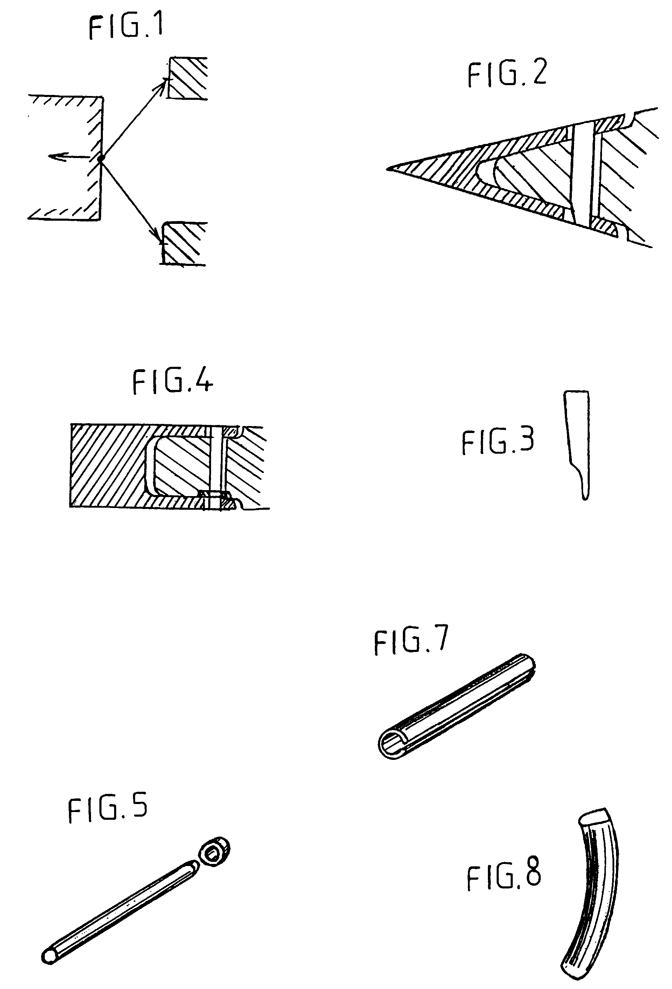

Tous les systèmes proposés, selon l'art antérieur, ont un point commun qui est de présenter et d'assurer un équilibre dans la tenue entre la dent rapportée et le nez adapteur correspondant. Il faut, en effet, eu égard aux contraintes d'utilisation, qu'il y ait une liaison ferme, constante, entre la dent et le nez adapteur, qui réponde aux sollicitations de poussée et de recul, lors des efforts effectués. Ainsi qu'illustrée figure 1 de manière schématique, la liaison entre les deux pièces est telle, qu'il doit y avoir une zone d'appui vers l'avant et des zones de contre-appui vers l'arrière, dans la liaison obtenue entre la dent et le nez adapteur.

Ainsi, selon l'art antérieur, dans une première réalisation, on utilise une clavette monolithique qui s'engage dans des ouvertures formées sur le nez adapteur et sur la dent correspondante. Cette disposition est illustrée aux figures 2 et 3 des dessins. Cette disposition est cependant difficile à réaliser, car elle impose une position géométrique rigoureuse de la dent par rapport à l'adapteur, faute de quoi la clavette, si ses faces utiles sont parallèles, peut ne pas pouvoir entrer dans son logement, ou ne pas assurer le serrage désiré. Pour remédier à cet inconvénient, il a été proposé d'agencer l'extrémité de base de la clavette avec un pan coupé lui assurant un effet de coin. Cependant, la position d'enfoncement reste aléatoire, et il arrive que la clavette puisse dépasser partiellement, d'un côté ou de l'autre, en constituant une gêne à l'assemblage. En outre, dans cette réalisation, le maintien de la clavette n'est pas assuré, ni définitif, et toute action de choc inopiné, à l'extrémité amincie de la clavette, peut provoquer son débattement ou désengagement de son logement, et rendre caduque la liaison de la dent sur le nez adapteur considéré.

Pour remédier à cet inconvénient, il a été proposé, représentée figure 3, une extrémité amincie de la clavette que l'on rabat pour empêcher son dégagement, et dans une autre réalisation, telle que représentée figure 4, l'utilisation d'une clavette cylindrique avec une bague d'arrêt, du type circlips, qui requiert la formation d'un logement dans le nez adapteur, ou l'utilisation d'un chapeau coinceur d'extrémité, métallique ou en caoutchouc, représenté figure 5. On connaît également, selon la figure 6, un système multi-clavettes permettant un blocage par un effet de coin en raison de pentes inverses.

Dans toutes ces mises en oeuvre, pour que le clavetage reste efficace en service, quand il est mécanique et direct, avec une clavette monolithique, il entraîne la mise en place de celle-ci à force, en provocant un matage des zones réceptrices de la dent, avec une possible déformation de la clavette.

Selon d'autres solutions de l'art antérieur, il a été proposé un clavetage mécanique par clavette élastique. Ce système de liaison permet d'assurer simultanément le maintien de la dent et la retenue de la clavette. Dans cette mise en oeuvre, la latitude donnée par les divers dispositifs est réduite et ne permet pas de faire abstraction d'une exigence de géométrie rigoureuse dans les positions de la dent et du nez adapteur. Pour illustrer cette disposition, on a représenté, aux figures 7 et 8, des clavettes métalliques qui ont une élasticité avec une forme curviligne qui tend à se déformer lors de la mise en place de la clavette dans la liaison désirée. Ces clavettes peuvent être du type mécanindus ou être de section pleine. En variante, les clavettes peuvent être munies de bague ressort, dans leur partie centrale.

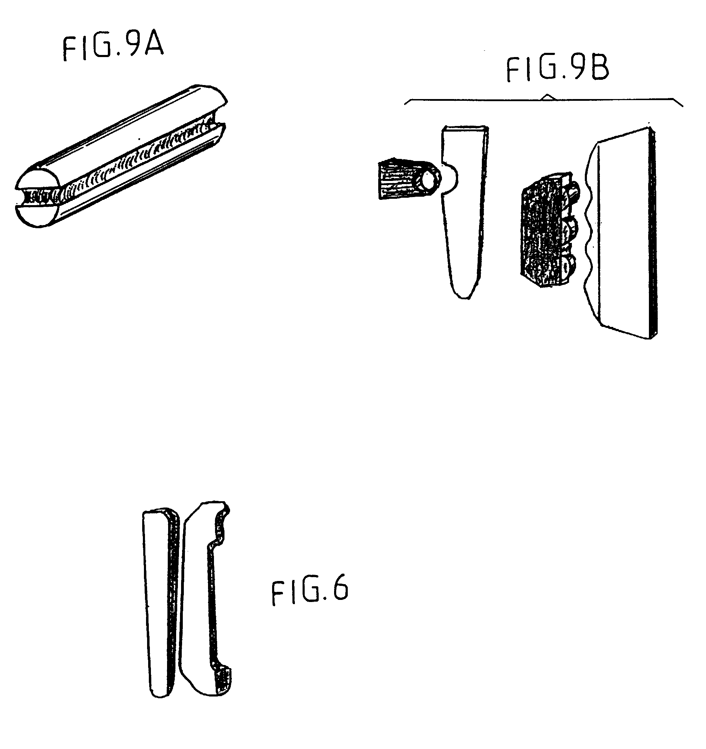

Selon d'autres possibilités de l'art antérieur, il est proposé un clavetage comprenant un élément en caoutchouc, soit intégré dans une structure sandwich (figure 9a), soit indépendant (figure 9b), en combinaison avec une clavette. Dans cette dernière mise en oeuvre, le bloc caoutchouc comprend des inserts et est conformé avec une alternance de creux et bossages, espacés les uns des autres, et disposés en regard et le long de la clavette considérée pour venir en regard de formes en creux et reliefs complémentaires, établies et disposées sur celle-ci. La liaison s'effectue par l'assemblage des deux, après introduction préalable du bloc caoutchouc, puis enserrage à force de la clavette. Dans cette mise en oeuvre, le bloc caoutchouc préalablement placé dans son logement dans l'adapteur doit avoir une position relative précise par rapport à la dent et à la clavette, laquelle doit pouvoir être introduite en écartant les reliefs du bloc caoutchouc qui doivent se replacer ensuite dans les creux correspondants de la clavette quand celle-ci est en place. Si le serrage est trop fort, la clavette ne peut pas rentrer, peut éventuellement détériorer le bloc caoutchouc en le déchirant. Si le serrage est insuffisant, le passage de la clavette est facile mais sa tenue en service n'est plus assurée.

L'ensemble des dispositions connues, selon l'art antérieur, montre qu'il existe un certain nombre d'inconvénients importants, tels que des difficultés en raison des mises en place et enlèvements à force, mauvaises tenues en service avec pertes des clavettes et dents, mouvements des dents sur les adapteurs dont elles provoquent l'usure du nez, laquelle s'aggrave au fur et à mesure des changements de dents et par le jeu ainsi formé contribue à leur rupture.

En plus de cela, les assemblages avec des adapteurs usés sont incertains puisque les éléments de liaison, clavettes et blocs caoutchouc dont les formes et dimensions sont préétablies, pour être conformes à la première monte, ne leur correspondent plus. Il est parfois nécessaire d'avoir recours à des clavettes de formes spéciales compensées, ce qui complique beaucoup les conditions de mise en oeuvre.

Dans tous les cas, il est exigé une précision géométrique très rigoureuse dans la position de la dent par rapport à l'adapteur, de façon à ce que les alignements des points d'action et de réaction définis par les appuis et contre-appuis entre dent et adapteur, soient dans les limites possibles géométriques du système de clavetage retenu.

Cette précision géométrique de position nécessaire aussi bien dans la première monte, que dans les agencements ultérieurs de dents sur les adapteurs, montre que l'interchangeabilité est délicate à obtenir et à contrôler, et en tous les cas, d'un coût de revient élevé. Les formes obtenues, dans certains cas, sont complexes, entraînant des procédés de fabrication coûteux à mettre en oeuvre. En outre, les montages ne sont pas aisés à obtenir lorsqu'il y a lieu sur place de procéder au changement des dents sur les adapteurs, dans les cas où les serrages des clavetages sont trop importants.

On connaît par ailleurs, selon l'art antérieur, la possibilité de disposer des bandes de garnitures en matériaux compressibles entre la dent et l'adapteur qui ne sont donc plus de ce fait en contact direct. C'est notamment le cas dans le Brevet DE 3.538.156. Ces bandes de matériaux compressibles n'ont pas la capacité de supporter les contraintes mécaniques transmises à la dent, leur tenue en position est problématique en service quand les dents bougent et elles se trouvent progressivement détériorées.

Le Brevet US 3.707.788 prévoit la mise en place au fond de la dent d'un matériau élastomère pré-établi déformable contre lequel prend appui l'extrémité de l'adapteur, ce matériau ayant une fonction de contre-appui mais n'assurant pas une liaison entre la dent et l'adapteur.

On connaît également, par le Brevet US 4.470.210 ESCO, l'utilisation d'un matériau fluide susceptible de constituer, après refroidissement, une empreinte définitive permettant la fixation de la queue support du nez adapteur sur lequel est rapportée et maintenue une dent à l'aide de moyens de fixation. Cette empreinte préétablie a pour fonction unique de permettre un changement aisé de l'ensemble dent-adapteur et de permettre un repositionnement, dans des conditions d'angulation et d'orientation définies, d'un nouvel ensemble à partir de l'empreinte.

Par ailleurs, la partie siège agencée pour la réception de la queue support du nez adapteur, selon ESCO, présente une configuration sphérique prolongée par un évidement pour la réception de la partie sphérique et de l'extrémité polygonale de ladite queue support. Le matériau de remplissage assure le scellement de la queue support du nez adapteur. Un cordon de soudure assure ensuite la liaison fixe et définitive du nez adapteur sur la partie siège réceptrice supprimant tout mouvement. Le matériau de remplissage n'assure que la liaison par scellement du nez adapteur sur la partie siège.

L'ensemble des documents relevant de l'art antérieur ne propose aucun dispositif simple et rapide de montage et démontage d'une dent sur un adapteur en assurant une tenue de l'ensemble en toutes circonstances en fonction des contraintes d'utilisation.

Le but recherché selon l'invention était donc de remédier à ces inconvénients, en proposant un nouveau type de liaison entre les dents et les adapteurs, simple, efficace et rapide, évitant toutes les contraintes antérieures relatives, d'une part, aux précisions géométriques dimensionnelles des zones et organes de liaison, en assurant leur tenue. en place pendant le travail, et d'autre part, évitant leur détérioration.

Un autre but recherché selon l'invention était de proposer un nouveau type de liaison qui puisse être mis en place par les opérateurs sans difficultés particulières, et notamment directement aux endroits d'utilisation du matériel et équipement des travaux publics.

Un autre but recherché selon l'invention était de proposer un nouveau type de liaison entre la ou les dents, et le ou les adapteurs, godets, lèvres de godets, renforts, boucliers, ou autres pièces d'usure, parfaitement fiable en position de service et d'utilisation du matériel, sans risque de désengagement inopiné par suite de choc extérieur.

Ces buts et d'autres encore ressortiront bien de la suite de la description.

Selon une première caractéristique de l'invention, le dispositif de liaison de pièces d'usure et celles qui les reçoivent telles que, entre des dents amovibles et des adapteurs formés aux extrémités d'outils et réceptacles en usage sur les engins de travaux publics, ladite dent présentant une forme creuse intérieurement, ledit adapteur présentant une forme en nez autorisant son engagement dans ladite dent, est remarquable en ce que la dent et l'adapteur sont agencés sur au moins une ou leurs faces de contact, et/ou dans leur épaisseur avec une ou des configurations additionnelles pour constituer des zones et volumes d'introduction, de logement, de retenue et d'enlèvement d'un matériau de remplissage mis en place après montage préalable de la dent sur l'adapteur pour constituer au moins dans ces zones, un contact absolu entre la dent et l'adapteur, permettant à ce dernier d'accepter les contraintes et sollicitations sur de plus grandes surfaces, le matériau étant sous forme fluide et capable d'auto-déformation, et en ce que la ou les configurations additionnelles sont situées à proximité et en liaison avec la ou les ouvertures d'introduction du matériau fluide, et en ce que le matériau introduit en se solidifiant assure les fonctions de liaison et de maintien entre la dent et l'adapteur, et en ce que la ou les configurations additionnelles des zones de logements destinées au remplissage et retenue du matériau ont pour fonction de fixer une ou des masses de matériau élastique d'un volume suffisant pour être capable de jouer en compression, en expansion, pendant la transmission à l'adapteur des contraintes mécaniques multi-directionnelles que reçoit la dent pendant son travail.

Selon une deuxième caractéristique de l'invention, le dispositif est remarquable en ce qu'il comprend une clavette solidarisée avec la dent et éventuellement également avec l'adapteur, ledit matériau de remplissage faisant office de contre-clavette et assurant sa tenue en service.

Selon une troisième caractéristique de l'invention, le procédé de liaison entre des dents et des adapteurs et similaires est remarquable:
- en ce qu'on place la dent sur son adapteur en contact avec ce dernier, donc dans sa position finale, sans recherche d'une quelconque précision sur le niveau d'emmanchement,
- et en ce que l'on dispose par versement à l'état liquide ou pâteux le matériau de remplissage entre la dent et l'adapteur, dans le ou les volumes définis, entre la dent et l'adapteur, ledit matériau étant capable d'auto-déformation pour pouvoir investir le ou les volumes formant logements attribués, quels que soient ces volumes et leurs formes, puis s'y retrouver, à l'état solide, prêt à assurer les fonctions de liaison et de maintien entre la dent et l'adapteur, et en absorbant et en amortissant les contraintes mécaniques multidirectionnelles engendrées lors du travail de la dent.

Ces caractéristiques et d'autres encore ressortiront bien de la suite de la description.

Pour fixer l'objet de l'invention illustrée d'une manière non limitative aux figures des dessins où:
- les figures 1 à 9A, 9B illustrent différents systèmes de liaison connus de l'art antérieur,

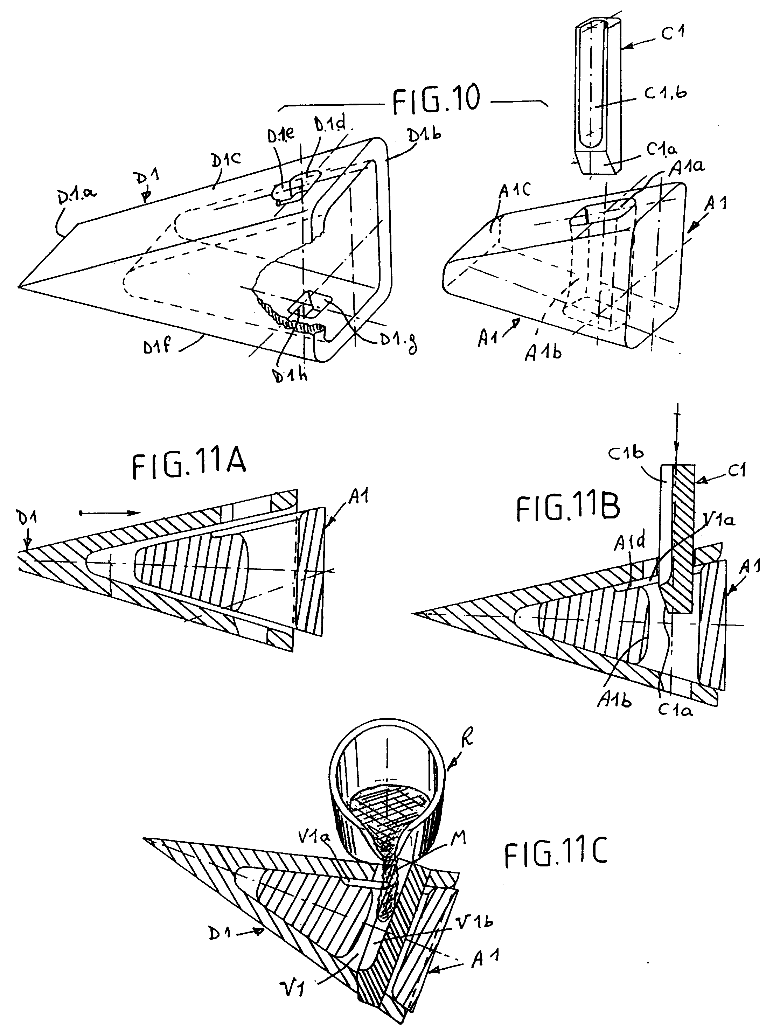

- la figure 10 est une vue en position éclatée avant montage du dispositif de liaison selon l'invention, dans une première variante de réalisation,

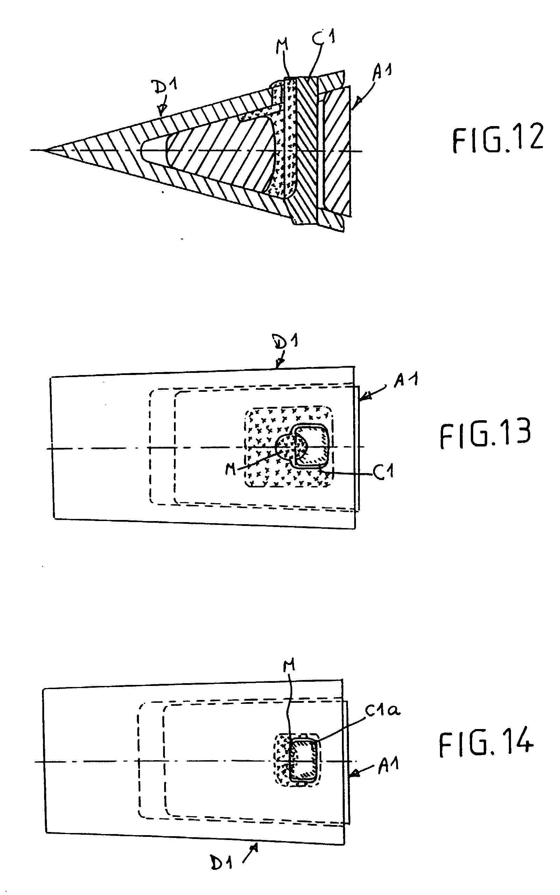

- les figures 11A, 11B, 11C illustrent la mise en place des différents moyens, selon l'invention, de la figure 10,
- la figure 12 est une vue illustrant l'assemblage des moyens de l'invention, selon les figures 10 et 11A, 11B, 11C,
- la figure 13 est une vue de dessus, selon la figure 12,
- la figure 14 est une vue de dessous, selon la figure 12,

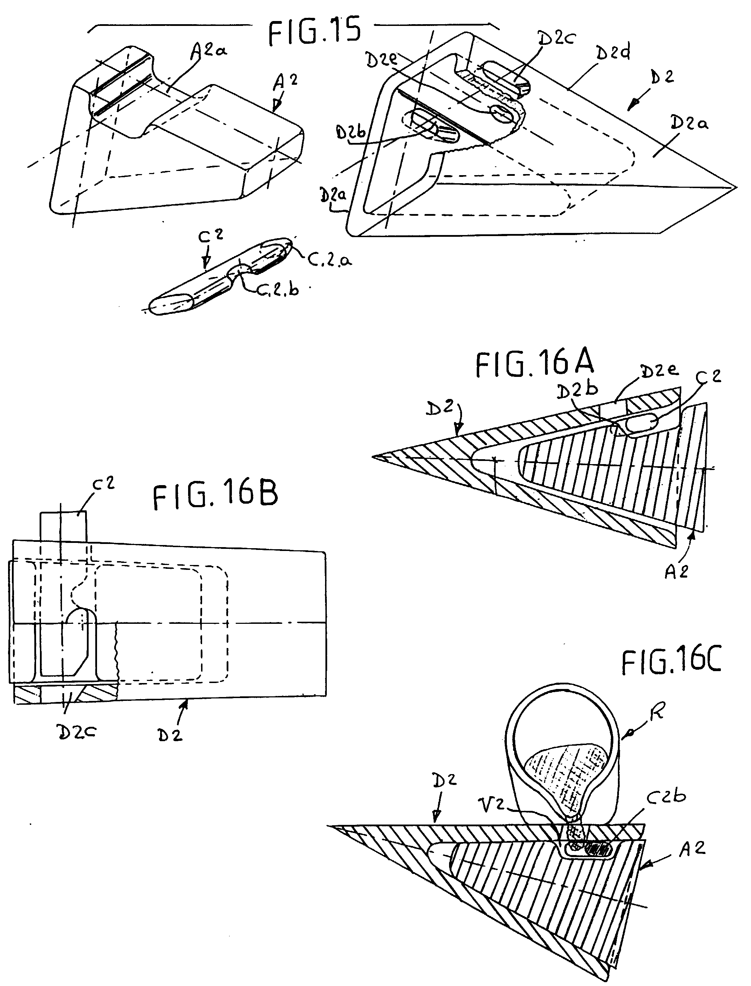

- la figure 15 est une vue en position éclatée avant montage du dispositif de liaison, selon l'invention, dans une seconde variante de réalisation,
- les figures 16A, 16B, 16C illustrent la mise en place des différents moyens, selon l'invention, de la figure 15,

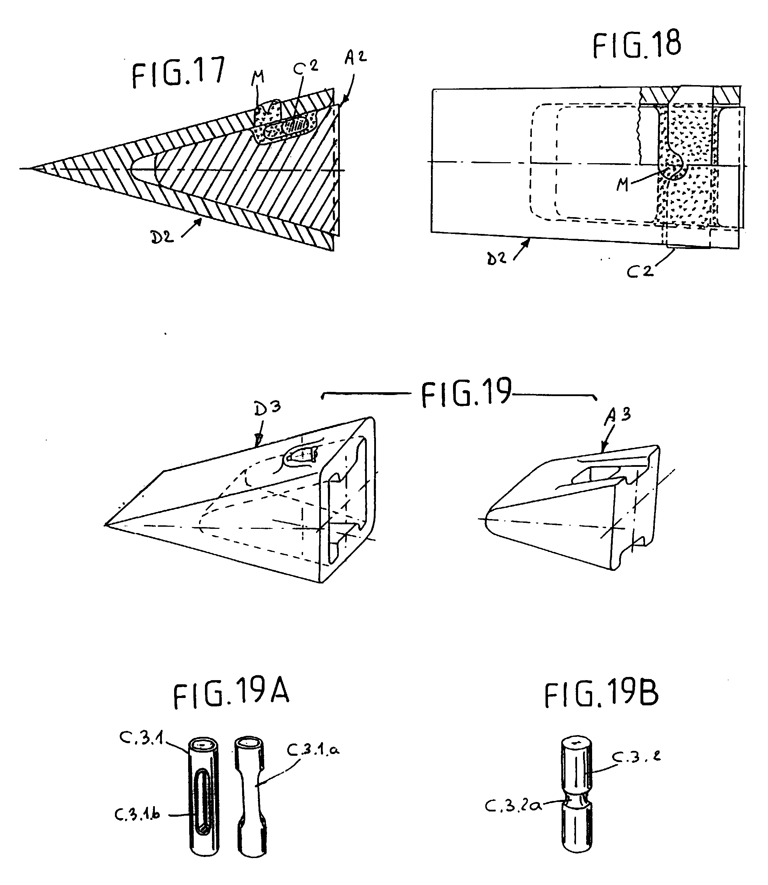

- la figure 17 est une vue illustrant l'assemblage des moyens de l'invention, selon les figures 16A, 16B, 16C,
- la figure 18 est une vue de dessus, selon la figure 17, avec coupe partielle,
- la figure 19 est une vue en position éclatée avant montage du dispositif de liaison, selon l'invention, dans une troisième variante de réalisation,
- les figures 19A, 19B sont des vues illustrant des formes possibles d'inserts, dans la mise en oeuvre de la figure 19,

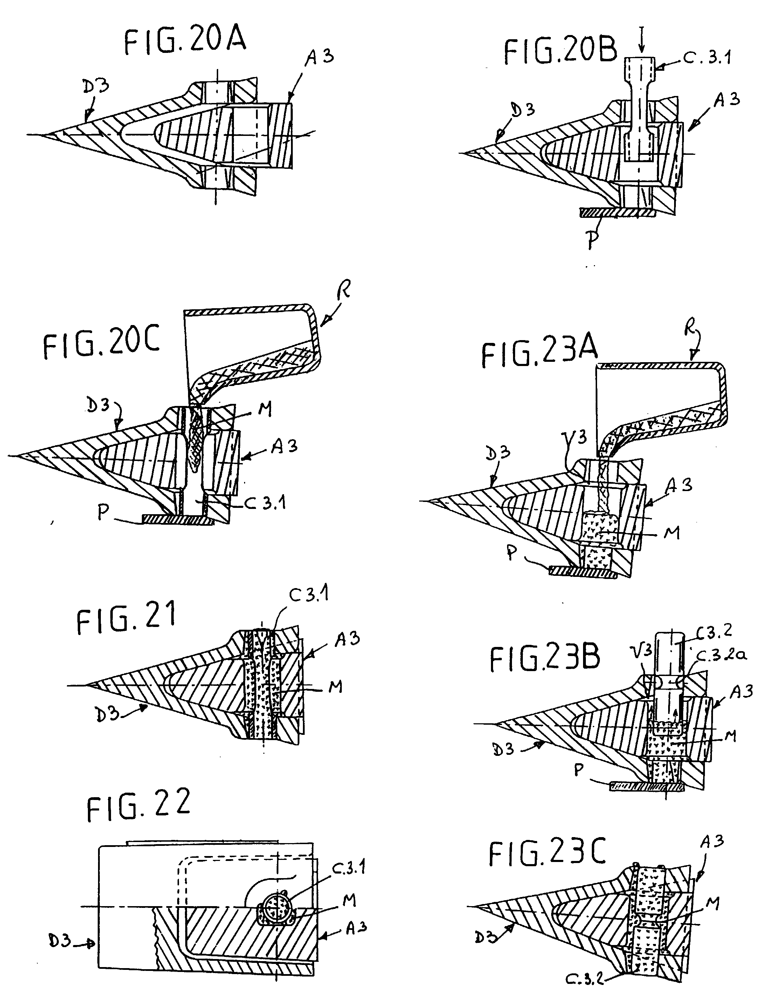

- les figures 20A, 20B, 20C illustrent la mise en place des différents moyens, selon l'invention, de la figure 19, avec l'utilisation d'un insert selon la figure 19A,
- la figure 21 est une vue montrant l'assemblage obtenu selon les figures 20A, 20B, 20C,
- la figure 22 est une vue de dessus selon la figure 21, avec coupe partielle,
- les figures 23A, 23B, 23C illustrent la mise en place des différents moyens, selon l'invention, de la figure 19, avec l'utilisation d'un insert selon la figure 19B,

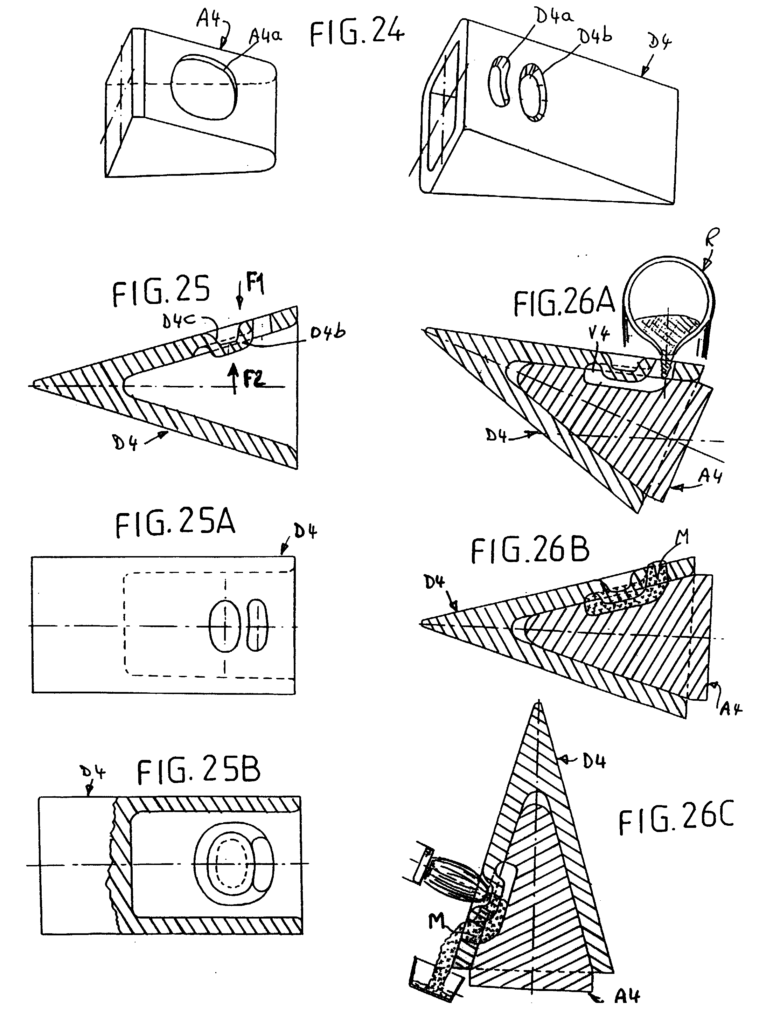

- la figure 24 illustre, dans une quatrième variante de réalisation, l'agencement de la dent et de l'adapteur, dans une vue en perspective,
- la figure 25 illustre, en coupe, le profil de la dent, selon la figure 24,
- la figure 25A illustre la vue extérieure de la dent selon la figure 25, selon la flêche F1,
- la figure 25B illustre la vue intérieure de la dent selon la figure 25, selon la flêche F2,

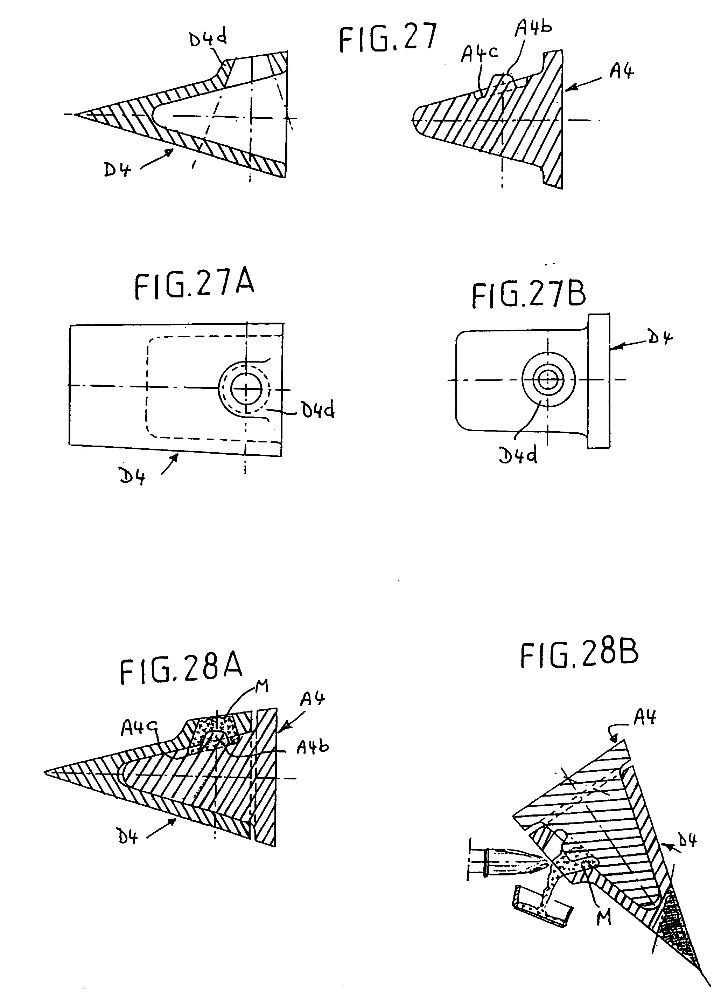

- les figures 26A, 26B illustrent la mise en place de la dent sur l'adapteur,
- la figure 26C illustre l'enlèvement de la dent de l'adapteur,
- la figure 27 illustre une autre variante, dans la formation de la dent et de l'adapteur,
- les figures 27A et 27B sont des vues de dessus respectivement de la dent de l'adapteur, selon la figure 27,
- les figures 28A et 28B illustrent l'ensemble monté selon la figure 27, puis l'enlèvement de la dent par rapport à l'adapteur,

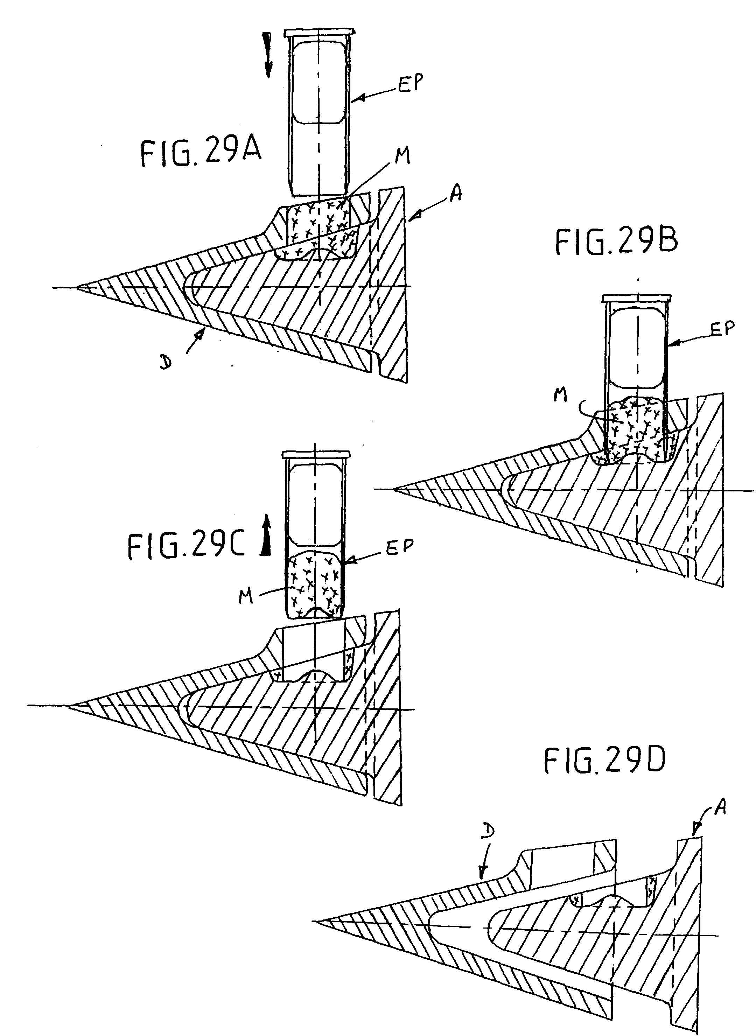

- les figures 29A et 29B, 29C et 29D, illustrent une variante de mise en oeuvre de l'invention avec notamment la représentation d'un moyen emporte-pièce permettant le démontage de la liaison de la dent sur l'adapteur, par enlèvement du matériau qui l'assure,

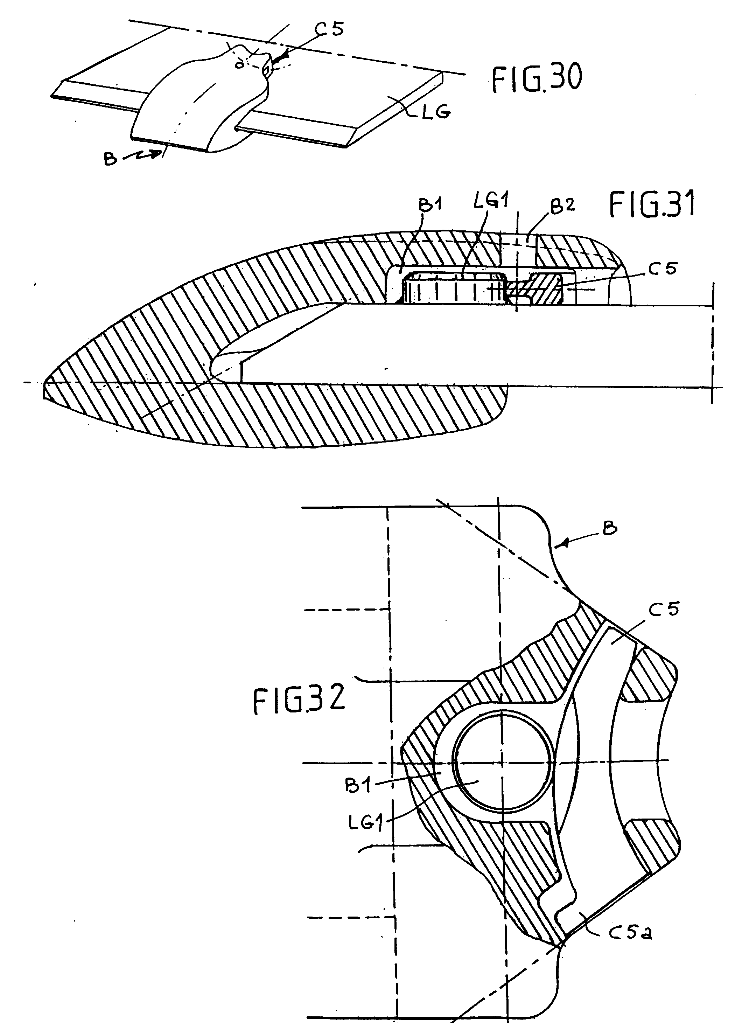

- la figure 30 est une vue illustrant en perspective l'application de l'invention par l'adaptation d'un bouclier sur une lame de godet couramment utilisé dans le domaine technique de l'invention,
- la figure 31 est une vue en coupe selon la figure 30 illustrant le montage et la liaison du bouclier sur la lame de godet avec l'application du dispositif de l'invention,
- la figure 32 est une vue en coupe de dessus selon la figure 31 illustrant notamment les formes spécifiques de la clavette de liaison entre le bouclier et la lèvre de godet,

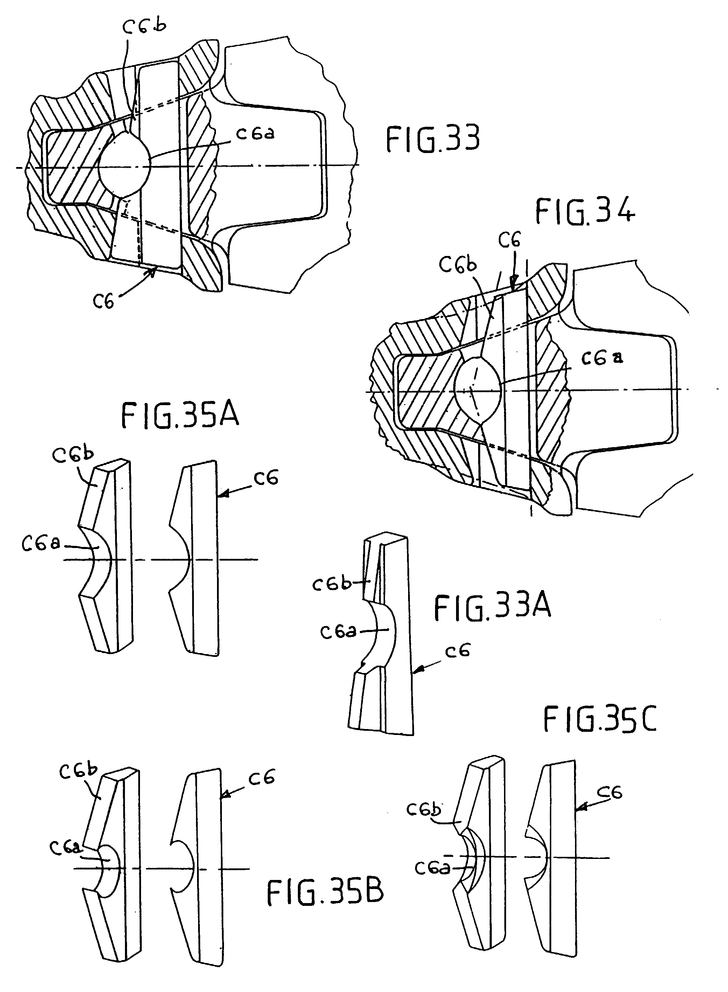

- la figure 33 est une vue en variante d'une autre mise en oeuvre de montage de la dent sur l'adapteur avec la représentation d'une clavette à profil particulier (figure 33A),
- la figure 34 est une autre variante selon la figure 33,
- les figures 35A, 35B, 35C représentent différentes formes de clavettes s'adaptant sur la variante figure 34,

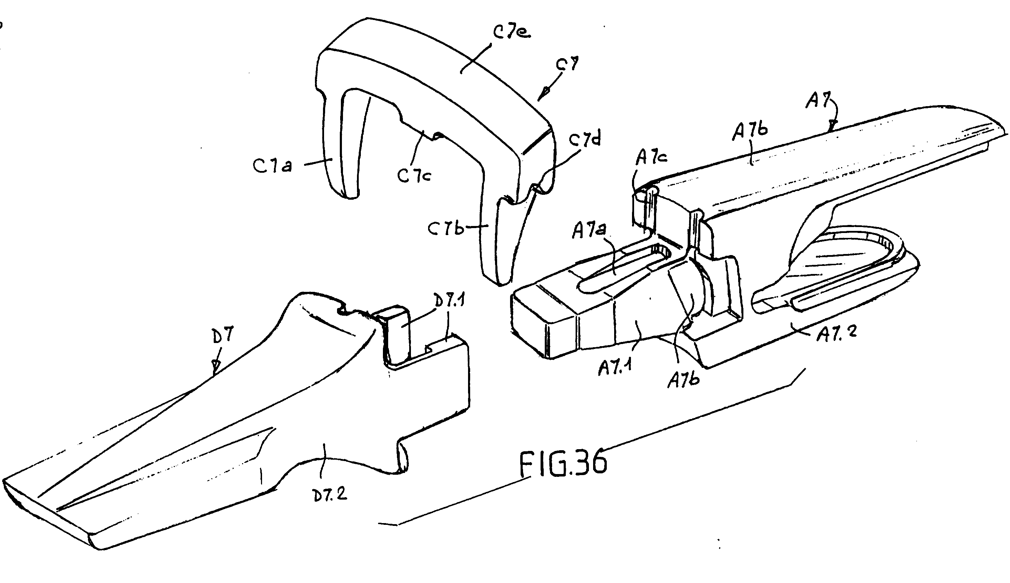

- la figure 36 est une vue en perspective avant montage d'une autre variante d'application de l'invention dans le cas où la liaison entre l'adapteur et la dent requiert l'utilisation d'une clavette en forme de cavalier pour assurer la fonction clavetage et la fonction protection du dos de l'adapteur, outre l'utilisation du matériau de remplissage selon l'invention,

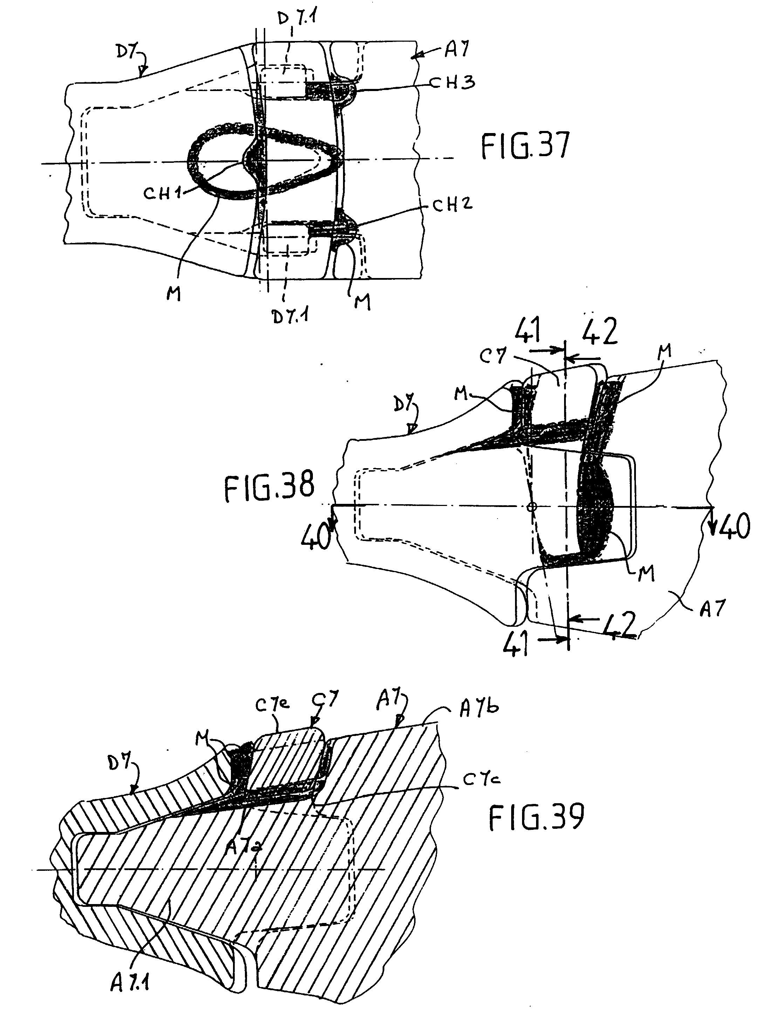

- la figure 37 est une vue de dessus selon la figure 36,
- la figure 38 est une vue latérale extérieure selon la figure 36,

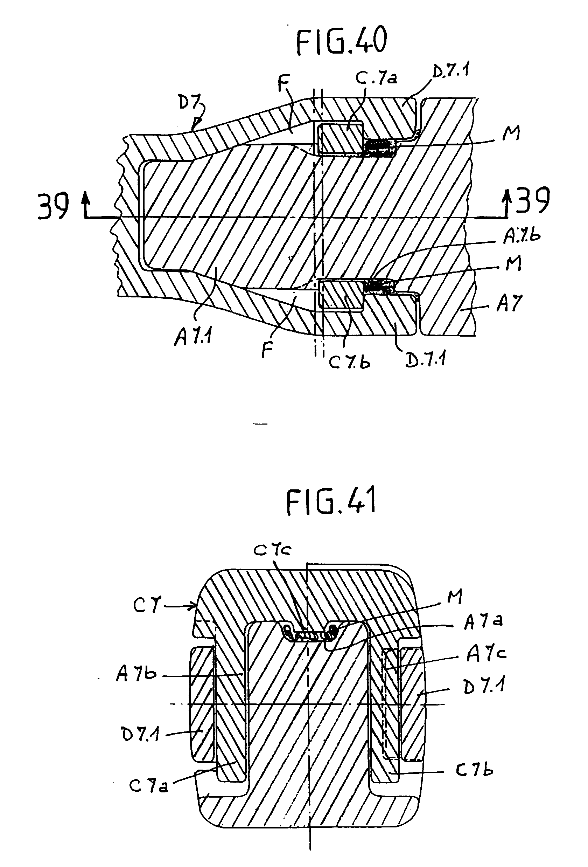

- la figure 39 est une vue en coupe selon la ligne 39 de la figure 40,
- la figure 40 est une vue en coupe selon la ligne 40 de la figure 38,
- la figure 41 est une vue en deux demi-coupes opposées selon les lignes 41 et 42 de la figure 38,

Afin de rendre plus concret l'objet de l'invention, on le décrit maintenant, d'une manière non limitative, illustré aux dessins.

L'invention s'applique au montage des pièces d'usure telles que dents et adapteurs, godets, coins, lèvres de godets, renforts, boucliers, et toutes pièces d'usure similaires adaptées et utilisées pour les engins de travaux publics, et équipements divers mis en oeuvre dans les traitements des matériaux et leur manutention.

Dans la suite de la description on fera essentiellement référence à l'application de l'invention aux dents et adapteurs, à titre non limitatif.

Ce dispositif de liaison, objet de l'invention, est original en ce que dans tous les cas il supprime toutes contraintes dans les obligations de position géométrique et dimensionnelle entre la dent (D) et l'adapteur (A) s'y rapportant, cela par l'adjonction d'un matériau (M) spécifique assurant, seul ou en combinaison avec une clavette (C), la liaison entre la dent et l'adapteur considéré.

Selon l'invention, le dispositif de liaison, entre des dents amovibles et des adapteurs, est remarquable en ce que la dent et l'adapteur et pièces d'usure similaires sont agencés sur au moins une ou leurs faces de contact, et/ou dans leur épaisseur avec une ou des configurations additionnelles pour constituer des zones et volumes d'introduction, de logement, de retenue et d'enlèvement d'un matériau de remplissage mis en place après montage préalable de la dent sur l'adapteur, le matériau étant sous forme fluide et capable d'auto-déformation. La ou les configurations additionnelles sont situées à proximité et en liaison avec la ou les ouvertures d'introduction du matériau fluide. Le matériau introduit en se solidifiant assure les fonctions de liaison et de maintien entre la dent et l'adapteur. La ou les configurations additionnelles des zones de logement destinées au remplissage et retenue du matériau ont pour fonction de fixer une ou des masses de matériau élastique d'un volume suffisant pour être capable de jouer en compression, en expansion, pendant la transmission à l'adapteur des contraintes mécaniques multi-directionnelles que reçoit la dent pendant son travail.

Ce matériau spécifique présente la propriété d'une auto-déformation afin de pouvoir totalement investir, par pression ou par gravité, un ou des volumes (V) pré-établis constituant les logements, de forme variable, entre la dent et l'adapteur, et d'assurer in situ, en prenant ensuite l'état solide, une ou des masses, formant scellement et pouvant se comporter en bloc quelle qu'ait été la position de la dent vis-à-vis de l'adapteur avec laquelle elle a été mise simplement en contact.

Ce matériau spécifique (M) peut être, à titre d'exemples, non limitatifs :
- un produit liquide à la température ambiante qui prendra l'état solide par polymérisation, tel qu'une résine à un seul ou deux composants, un silicone élastomère, une résine thermofusible,
- un produit sous forme pulvérulente ou granulée réalisant, après sa mise en place, un durcissement massique par l'action d'un agent extérieur ou d'un réactif interne,
- un produit pâteux mis en place par pression puis durcissement par polymérisation ou vulcanisation, tel que résine moussante ou élastomère silicone,
- un produit solide tel qu'une vessie capable d'expansion par introduction d'un fluide liquide ou gazeux, dans une enveloppe en élastomère ou en caoutchouc.

Ce matériau spécifique offre des avantages particulièrement importants, et notamment en ce qu'il permet par un contact absolu entre la dent et l'adapteur, dans des zones et logements pré-établis, une diffusion rationnelle des contraintes mécaniques de travail sur la dent et l'adapteur assurant une meilleure répartition des forces de liaison et donc contribuant à une meilleure tenue de l'assemblage obtenu en limitant notablement les risques de rupture.

Ainsi qu'il sera précisé par la suite, ce matériau peut assurer seul le maintien de la dent sur l'adapteur, sans l'utilisation de clavette. Il peut également faire office de contre clavette, dans le cas d'usage d'une clavette, tout en assurant aussi sa tenue en service.

Ainsi, selon la solution et originalité de l'invention, la mise en place de l'assemblage s'effectue comme suit :
- on place la dent sur son adapteur en contact avec ce dernier, donc dans sa position finale, sans recherche d'un quelconque niveau d'emmanchement,
- on introduit après, entre la dent et l'adapteur, le matériau spécifique, du type précité, capable d'auto-déformation pour pouvoir investir le ou les volumes formant logements qui lui sont attribués, quels que soient ces volumes, puis s'y retrouver in situ à l'état solide, prêt à assurer les fonctions de blocage désirées.

Dans le cas de l'utilisation d'une clavette
- on place la dent sur son adapteur en contact avec ce dernier, donc dans sa position finale, sans recherche d'un quelconque niveau d'emmanchement,
- on introduit la clavette entre la dent et l'adapteur qui par un effet de coin se trouve solidarisée avec la dent, la clavette devenant solidaire de la dent, sans qu'elle touche l'adapteur, vis-à-vis duquel il ne lui est demandé aucune précision. Un jeu notable les sépare. La clavette peut aussi non impérativement se trouver simultanément en contact avec la dent et l'adapteur,
- on introduit après, entre l'adapteur la dent et la clavette, le matériau spécifique, du type précité, capable d'auto-déformation pour pouvoir investir le ou les volumes formant logements qui lui sont attribués, quels que soient ces volumes, puis s'y retrouver in situ à l'état solide, prêt à assurer les fonctions de blocage désirées.

L'invention doit être examinée à trois niveaux dont l'importance est équivalente, la mise en place des éléments, le comportement en service, l'opération de remplacement des pièces usées.

### * Mise en place des éléments:

Une différence fondamentale de l'invention par rapport à l'art antérieur réside en ce que le matériau spécifique de blocage n'est plus asservi par une forme géométrique restrictive de départ, mais peut, sans réserve, compenser le volume de blocage, selon le besoin nécessaire dans chaque cas. On ne recherche plus une position géométrique rigoureuse de la dent sur l'adapteur, on gère simplement la position de la dent quand elle est au contact de l'adapteur quelle que soit cette position. On élimine ainsi les opérations finales d'ajustage et de contrôles géométriques dont le coût de revient est important.

S'il est fait usage d'une clavette, chacun des trois éléments : dent, adapteur, clavette, peut disposer d'un aménagement particulier destiné à permettre le passage du matériau de remplissage qui va investir le volume permis pour former l'élément élastique recherché. Contrairement à l'art antérieur, la mise en place des éléments s'effectue rapidement sans aucun effort le matériau spécifique fluide dispose d'un temps de prise de l'état solide très court et ne pénalise pas le temps d'utilisation des machines.

### * Comportement en service:

Le matériau de remplissage tel qu'une résine, après polymérisation, peut se comporter lui-même en élément de retenue, sa masse étant prise dans un logement de l'adapteur. Dans le cas où il est fait usage d'une clavette, le matériau de remplissage assure deux autres fonctions en se comportant en contre-clavette et en assurant la tenue en place de la clavette. Ces dispositions interdisent toute sortie intempestive prématurée de la clavette sous la pression en service. La configuration des logements destinée aux matériaux de remplissage fluides dans l'adapteur présente deux particularités. La première est de tendre, dans l'interface avec la clavette, à former une masse de matériau créant un élément élastique d'un volume suffisant pour être capable de jouer en compression, expansion, pendant la transmission à l'adapteur des contraintes mécaniques multi-directionnelles que reçoit la dent pendant son travail.

La deuxième particularité est qu'indépendamment du jeu, entre dent et adapteur, qui peut se trouver dans la zone proche de l'introduction du matériau, on peut créer par enlèvement volontaire de matière sur l'adapteur des zones que le matériau peut investir facilement. Cela crée dans ces zones un contact absolu, entre la dent et l'adapteur, et établit un frein au mouvement relatif de ces deux éléments pendant leur travail réduisant ainsi beaucoup le risque d'usure du nez de l'adapteur.

### * Opération de remplacement des pièces usées :

Par vocation, elle est fréquente et doit donc être réalisée facilement, rapidement et en toute sécurité. La configuration de tous les éléments : adapteur, dent, clavette, est prévue de manière spécifique pour que ces conditions soient remplies.

La condition de démontabilité est totalement assurée, l'accès aux éléments concernés est prévu de même que les opérations nécessaires pour procéder à l'enlèvement des pièces usées. Quand il n'est pas fait usage d'une clavette et que le matériau assure lui-même la retenue de la dent, les zones de logement du matériau sont proches de l'orifice d'introduction. Le matériau peut donc être retiré par cet orifice soit par action d'une flamme, soit par action d'un outil emporte-pièce, ou autres outils.

Quand il est fait usage d'une clavette, il y a accès à celle-ci, et l'on peut enlever le matériau de remplissage par des opérations de chauffe ou par action mécanique sur la clavette provoquant la déchirure et le découpage du matériau.

Une des caractéristiques et avantages de l'invention est que si les conditions antérieures de travail ont entraîné un mouvement des pièces l'une par rapport à l'autre, le relief de l'adapteur peut avoir de l'usure. A chaque changement de dent, dans toutes les zones où il a accès, le matériau spécifique rattrape automatiquement le jeu qui a pu s'établir au précédent ouvrage. Cette caractéristique est particulièrement importante car elle offre une fiabilité et une tenue essentielle du dispositif.
Par le choix dont on dispose pour le matériau spécifique, pour sa souplesse et sa dureté, on solidarise la dent et l'adapteur, de façon optimale, par contact absolu. Cela permet de réduire le besoin de résistance du boîtier de la dent, donc d'en diminuer la masse. Le ratio d'utilisation de la dent s'en trouve ainsi amélioré, moins de métal étant rejeté pour la même usure.

Le dispositif, selon l'invention, et son procédé de mise en oeuvre, est applicable à toutes les formes de nez et d'adapteurs et toutes pièces d'usure pour engins de travaux publics, et tous volumes formant logements définis entre la dent et l'adapteur pour la réception des matériaux spécifiques. Il y a lieu maintenant de faire référence aux diverses variantes possibles non limitatives de mise en oeuvre du dispositif et du procédé selon l'invention, en se référant aux figures 10 à 41.

Dans la première réalisation, illustrée aux figures 10 à 14, la dent est référencée dans son ensemble par D1 et comprend une forme en dièdre, connue en elle-même, creuse intérieurement, et présentant une extrémité avant profilée (D1.a) pour râcler, et une base (D1.b) permettant son engagement autour de l'adapteur. La face supérieure (D1.c) présente une ouverture (D1.d), de section carrée ou rectangulaire par exemple, se prolongeant vers l'avant par une découpe (D1.e) formant chambre d'introduction du matériau (M). La face inférieure (D1.f) présente une ouverture (D1.g) de dimension plus réduite, et présentant en particulier un pan incliné (D1h) susceptible de coopérer avec la face complémentaire d'extrémité effilée (C1.a) de la clavette (C1). L'adapteur (A.1) présente une forme en nez susceptible de s'engager dans la dent. Ledit adapteur présente verticalement une ouverture (A1.a) autorisant l'engagement de la clavette (C1), cette ouverture est d'une dimension supérieure à la section de la clavette, permettant ainsi un montage rapide avec jeu de cette dernière pour l'assemblage de la dent sur l'adapteur. Ladite ouverture (A1.a), traversant de part en part l'adapteur, présente avantageusement, du côté du nez de celui-ci, une forme curviligne, concave (A1.b). La clavette (C1) présente, au dessus de son extrémité effilée (C1.a), un évidement (C1.b) débouchant vers le haut de la clavette. En outre, la face supérieure (A1.c) du nez présente un évidement (A1.d) autour de l'ouverture (A1.a) pour former, par rapport à la dent, un volume intérieur (V1.a). En se référant au montage de l'ensemble, selon les figures 11a, 11b, 11c de la dent sur l'adapteur et du positionnement de la clavette correspondante, on fait apparaître un volume ou chambre (V1) susceptible d'accueillir un matériau de remplissage, du type défini précédemment. Ce volume (V1) est défini d'une part par le volume (V1.a) formé dans la partie supérieure du nez, et d'autre part par le volume (V1.b) formé dans la chambre intérieure de l'adapteur, en regard de l'évidement (C1.b) établi sur la clavette. L'agencement de l'extrémité effilée de la clavette permet son positionnement dans l'ouverture inférieure formée sur la dent, par gravité dans son logement. La pente oblige la clavette à venir en appui sur les faces arrières des ouvertures de la dent, c'est-à-dire dans sa position utile de travail. Elle est alors totalement solidaire de la dent. Le volume (V1), ainsi considéré, est alors rempli par versement du matériau de remplissage (M), qui se trouve, dans cette mise en oeuvre, à l'état pâteux ou liquide et est stocké dans un récipient quelconque (R). En se référant à la figure 12, ledit matériau remplit totalement le ou les volumes précités, et assure, après solidification, un scellement total de la dent sur l'adapteur, avec une répartition homogène des zones de liaison et donc de blocage, en maintenant fermement la clavette intermédiaire.

Pour procéder au démontage de la dent, il est préférable de placer l'axe dent-adapteur, en position verticale, pour permettre l'accès à la face inférieure de la clavette. Cette dernière peut être extraite par action mécanique avec un marteau provocant l'arrachement du matériau spécifique qui peut être aussi évacué par action thermique à l'aide d'une flamme qui peut être rapprochée du volume de remplissage permettant son chauffage pour reprendre un état de fluidité dudit matériau. Cette opération peut s'effectuer éventuellement sans enlèvement préalable de la clavette. On peut procéder au chauffage préalable du matériau sans action sur la clavette, qui pourra ainsi être récupéré pour d'autres montages.

En se référant maintenant aux figures 15 à 18 des dessins, on a représenté une autre variante de réalisation et d'assemblage de l'ensemble. Dans ce cas, il est toujours utilisé une clavette intermédiaire (C2) permettant l'assemblage de la dent (D2) avec l'adapteur (A2). Dans cette mise en oeuvre, la clavette est positionnée horizontalement. A cet effet, la dent (D2) présente, sur ses faces latérales (D2.a), des configurations additionnelles avec des orifices (D2.b - D2.c) oblongs, permettant l'engagement de la clavette (C2). L'orifice (D2.b) est de forme et section similaires à la clavette pour permettre son entrée, tandis que l'orifice (D2.c) présente une forme conique avec pente pour assurer le contact de solidarisation avec la dent sur les faces arrières des ouvertures oblongues de la dent. La clavette présente, à cet effet, son extrémité arrière (C2.a) profilée de manière complémentaire pour assurer un positionnement parfait dans son logement. La face de dessus (D2.d) de la dent présente une ouverture (D2.e) pour autoriser, par l'extérieur, le versement du matériau spécifique. La clavette présente, dans sa partie médiane, un évidement semi circulaire (C2.b), destiné à être disposé à l'aplomb de l'ouverture de remplissage formée sur la dent, cet évidement contribuant ensuite à la liaison de l'ensemble.L'adapteur (A2) présente, lui, une large rainure transversale (A2.a) sur sa partie supérieure, pour permettre le passage et coulissement de la clavette. Cette rainure est établie avec une largeur et hauteur supérieures aux côtés de la clavette pour définir un volume ou chambre de remplissage (V2) du matériau. Ainsi qu'il apparaît aux figures 17 et 18, le matériau de remplissage investit tout le volume (V2) ainsi défini. L'enlèvement de la dent peut s'effectuer de manière similaire à l'opération précédente. On obtient une zone de scellement, après solidification du matériau, entre la dent, l'adapteur et la clavette, très importante, avec une parfaite répartition des forces de blocage et de liaison.

En se référant maintenant aux figures 19 à 23 des dessins, on a illustré une troisième forme de réalisation de l'assemblage, restant dans le principe de l'invention. Dans cette mise en oeuvre illustrée non limitativement, une pièce métallique (C3) qui n'est plus une clavette de liaison mais qui est un insert, dont l'utilité se retrouve au moment de l'enlèvement de la dent après usure. Dans cette mise en oeuvre, la fonction clavetage est assurée par le matériau spécifique lui-même qui reste en contact avec l'adapteur (A3) et la dent (D3) pour la partie de matériau spécifique qui, en épaisseur mince, se trouve entre l'insert métallique et les parois des orifices disposés dans la dent (D3). L'intérêt de l'insert métallique (C3) se retrouve, lors du besoin d'enlèvement de la dent après usure. On le chasse avec un marteau. Il libère alors la majeure partie du volume que représentent les deux orifices situés dans la dent (D3). La faible quantité résiduelle de matériau spécifique demeurant dans les orifices n'oppose plus une retenue susceptible d'empêcher l'enlèvement de la dent, même sans action thermique. Il y a lieu de noter en outre que l'insert (C3) assure une fonction d'armature pour le matériau spécifique pendant la durée de vie du clavetage ainsi formé. Selon la figure 19A, l'insert (C3.1) comprend, dans sa partie médiane, un rétrécissement (C3.1a) avec ouverture oblongue intermédiaire (C3.1b) autorisant le passage du matériau de remplissage. Selon la figure 19B, l'insert (C3.2) présente, dans sa partie médiane, une ou plusieurs gorges (C3.2a).

La dent (D3) présente, sur ses faces supérieure et inférieure, des ouvertures pour le passage de l'insert, tandis qu'il est utilisé, ainsi qu'il apparaît aux dessins, une plaque de retenue (P) de l'insert, faisant office de bouchon jusqu'à remplissage du matériau de liaison dans le volume (V3) ainsi considéré. Cette plaque de retenue est maintenue temporairement par tous moyens appropriés. L'insert est positionné avec jeu dans les ouvertures considérées. L'adapteur (A3) présente une ouverture dans son épaisseur pour autoriser le passage de l'insert avec jeu. Les inserts peuvent être creux intérieurement, et présenter à leurs extrémités, le cas échéant, des profils à pans coupés formant arrêtes de coupe, pouvant être utiles lors du retrait de l'insert, lors du changement de dents.

Dans cette mise en oeuvre, le montage de l'ensemble est le suivant. L'adapteur est sensiblement incliné par rapport à l'horizontale, ainsi qu'illustré figure 20A, pour permettre l'engagement de la dent, celle-ci venant en contact avec l'adapteur par gravité. L'insert est introduit et maintenu à sa base par une plaque métallique (P) rapportée à l'ouverture inférieure pour retenir l'insert et boucher l'orifice. On procède ensuite au remplissage du volume (V3) par le matériau approprié. Ce volume (V3) est défini par les sous-volumes (V3.a) correspondant à la cavité intérieure de l'insert (V3.b) de passage entre l'insert et les ouvertures en regard de l'adapteur et de la dent. Le matériau investit dans la totalité du volume précité. Après solidification du matériau, la plaque est enlevée.

Dans le cas de l'utilisation d'un insert, du type illustré figure 19B, l'opérateur procède à l'insertion de la dent sur l'adapteur (figure 23A). Il positionne préalablement la plaque de retenue dans la partie basse de l'assemblage, en vue d'obturer l'ouverture inférieure de la dent. Il introduit le matériau dans le volume (V3) considéré, selon un remplissage partiel. Il dispose et introduit ensuite l'insert (C3.2) dans son logement (figure 23B) jusqu'à noyer la partie basse de l'insert qui provoque la remontée du matériau spécifique. Celui-ci étant mis en place, l'opérateur complète, le cas échéant, le remplissage par le matériau qui obture et s'investit dans l'ensemble du volume considéré. La plaque est ensuite enlevée. L'enlèvement de la dent s'effectue par une technique similaire à celle décrite précédemment.

On expose ci-après la variante des réalisations représentées aux figures 24 à 28.

Dans cette mise en oeuvre particulière, on n'utilise plus de clavette métallique intermédiaire liant la dent et l'adapteur, et c'est seulement le matériau de remplissage qui assure la liaison de la dent et de l'adapteur, conformées avec des configurations additionnelles. Dans une première représentation (figures 24 à 26), l'adapteur (A4) présente, sur sa face supérieure, un évidement (A4.a) de très large dimension, circulaire ou autre, constituant une première zone de remplissage de matériau. La dent (D4) présente un orifice (D4.a) d'introduction du matériau destiné à être en regard de l'évidement (A4.a). La dent présente, en outre, une déformation intérieure formant saillie (D4.b), susceptible de pénétrer partiellement dans l'espace formé par l'évidement (A4.a) en créant ainsi une forme de crampon lorsque le matériau de remplissage a été introduit dans le volume (V4) précité. Ladite saillie (D4.b) forme empreinte, et présente elle-même, sur sa face supérieure, un évidement (D4.c) permettant, ainsi qu'il apparaît aux dessins, le chauffage du matériau par conduction thermique, en vue de sa mise à l'état fluide ou pâteux, pour permettre l'enlèvement de la dent.

Dans la deuxième réalisation illustrée figures 27 et 28, c'est l'adapteur (A4) lui-même qui présente, sur sa face supérieure, un bossage en surélévation (A4.b) jouant le rôle de crampon avec une couronne circulaire (A4.c) permettant le remplissage du matériau. La dent (D4) présente, à sa partie supérieure, une surélévation, formant chapeau (D4.d), susceptible de venir coiffer largement le bossage précité avec jeu, en laissant un volume pour le remplissage du matériau de liaison. Ledit chapeau est ouvert à sa partie supérieure pour permettre la coulée du matériau de remplissage. L'enlèvement de la dent s'effectue par un simple chauffage du matériau permettant ensuite, à l'état fluide ou pâteux, de dégager la dent de l'adapteur.

On a représenté aux figures 29A, 29B, 29C, 29D, une autre variante de réalisation illustrant la liaison dent et adapteur, sans clavette. Ainsi qu'il apparaît aux dessins l'orifice d'introduction du matériau est disposé dans un plan au-dessus d'un logement formé sur l'adapteur, ce logement formant une couronne, de plus grandes dimensions que l'orifice, avec bossage central de retenue du matériau. Dans cette mise en oeuvre, on utilise un outil emporte-pièce (EP) qui est susceptible de venir découper le matériau solidifié et permettre la séparation de la dent de l'adapteur en laissant dans le logement une masse limitée de matériau pouvant être raclée ultérieurement.

Dans la représentation des figures 30 à 32, un bouclier (B) est solidarisé à une lèvre de godet (LG). Celle-ci comprend, sur sa face supérieure, une portée circulaire (LG1) pouvant s'insérer dans une cavité (B1) intérieure de grandes dimensions et volumes formée sur la partie supérieure du bouclier, cette cavité étant en liaison avec un orifice (B2) permettant l'introduction du matériau de remplissage. La cavité précitée est profilée pour permettre l'introduction d'une clavette traversante (C5) dont la forme est avantageusement circulaire, à section dégressive, cette clavette présentant un talon (C5a) s'engageant dans un évidement formé dans la cavité. Le matériau de remplissage assurera la solidarisation du bouclier sur la lèvre de godet avec la clavette intermédiaire dans les cavités formées. L'enlèvement de cette clavette s'effectuera par une simple action de frappe sur son extrémité amincie, le matériau étant alors déchiré et permettant la sortie de la clavette.

En se référant aux figures 33, 33A, 34, 35A, 35B, 35C, on a représenté l'insertion d'une clavette profilée entre la dent et l'adapteur dans des cavités pré-établies permettant le remplissage du matériau spécifique. Ces clavettes (C6) peuvent présenter dans leur partie médiane une gorge (C6a) circulaire avec des parties d'extrémité (C6b) formant biseau pour sectionner le matériau de remplissage lors de l'enlèvement des clavettes.

On a réprésenté aux figures 36 à 41 une autre mise en oeuvre de l'invention dans laquelle les clavettes sont reliées à un élément de protection de l'adapteur pour former un ensemble monolithique multi-usage. La liaison entre la dent (D7) et l'adapteur (A7) s'effectue à l'aide d'une clavette (C7) formant cavalier, l'ensemble étant agencé pour permettre l'introduction, la retenue du matériau de liaison à travers trois orifices d'introduction disposés dans le même plan et permettant la formation de zones d'ancrage entre la dent et l'adapteur dans des plans différents.

Dans cette configuration, la dent (D7) présente deux oreilles latérales (D7.1) de profil sensiblement rectangulaire, d'épaisseur plus importante que la partie de liaison (D7.2) avec le corps de la dent. L'adapteur (A7) présente un nez profilé (A7.1) susceptible de s'engager à complémentarité et avec jeu dans le corps de la dent, le nez de cet adapteur étant de section très inférieure au corps (A7.2) de l'adapteur en définissant latéralement des espaces pour l'introduction et l'encastrement des oreilles de la dent.

Selon l'invention, le nez de l'adapteur présente, dans son épaisseur, trois zones d'évidement formant logements (A7a, A7b, A7c), l'une étant dans un plan supérieur et les deux autres dans des plans latéraux verticaux de part et d'autre du nez de l'adapteur. Ces logements sont établis selon un volume déterminé et les logements latéraux se trouvent ainsi en regard des parties d'oreilles et des zones de liaison de la dent avec le nez. On définit ainsi, après mise en place de la dent sur le corps adapteur, trois cavités, l'une dans un plan supérieur et horizontal ou sensiblement, et les autres dans des plans latéraux verticaux. Les espaces (F) ainsi formés permettent l'insertion à emmanchement rapide et libre de la clavette-cavalier (C7) qui présente ainsi deux branches (C7a, C7b) pénétrant librement dans les cavités latérales. En outre, la clavette-cavalier présente entre ses deux branches et sur sa face inférieure un bossage ou saillie (C7c) pénétrant dans le logement supérieur (A7a) formé sur le nez de l'adapteur. Les branches de la clavette-cavalier ont avantageusement un profil curviligne et elles viennent en butée derrière les oreilles formées sur la dent pour en assurer la retenue.

D'une manière essentielle trois cheminées (CH1 - CH2 - CH3) ou orifices sont formés à partir de la partie supérieure de la dent et du corps de l'adapteur, ces cheminées débouchant dans les cavités formant logements pour l'introduction et la retenue du matériau de remplissage. Les parties d'extrémité des branches de la clavette ne traversent pas le corps de l'adapteur. Le matériau de remplissage se propage à l'état fluide dans l'ensemble des cavités formées et on obtient ainsi une liaison ferme dans tous les plans de jonction ainsi constitués.

Avantageusement, la clavette cavalier est agencée à l'endroit de formation de ses branches avec un évidement (C7d) permettant l'introduction d'un outil pour le dégagement de la clavette.

La clavette-cavalier ne débouchant pas dans la partie inférieure de l'adapteur, se trouve ainsi complètement abritée des pressions éventuelles issues des matériaux susceptibles de tendre à la chasser. En outre, la partie supérieure (C7e) de la clavette formant pontelet s'adapte au profil du dos (A7b) de l'adapteur qui est ainsi protégé et se trouve, après positionnement, dans un plan de continuité entre les profils correspondants et en regard de la dent et de l'adapteur. Les pressions des matériaux sur cette face supérieure de la clavette-cavalier ne peuvent que contribuer à la maintenir en place.

Le blocage du matériau élastique interdit tout mouvement direct linéaire d'extraction, laquelle ne peut se faire que par un mouvement circulaire volontaire dû au profil de la clavette. Cela permet de ne mettre en jeu qu'une force de retenue limitée par la présence du matériau sur la courbe concave des clavettes en rendant leur enlèvement facile.

Sans sortir du cadre de l'invention les formes en creux et bossages ou configurations additionnelles, établies sur la dent et l'adapteur, peuvent varier selon les besoins et les applications.

Les avantages, selon l'invention, apparaissent d'une manière évidente. Quels que soient les modes de réalisation, le montage de la dent sur l'adapteur s'effectue sans obligation de positionnement géométrique rigoureux. Après mise en contact de la dent sur l'adapteur par gravité ou maintien manuel, soit l'on introduit la clavette ou un insert puis le matériau de remplissage, soit le matériau lui-même qui investit les volumes (V1 - V2 - V3 - V4) ainsi définis. Le montage est extrêmement simple, et obvie à toutes les contraintes rencontrées ultérieurement. En outre, la solution proposée permet d'obtenir des plages de contact absolu et de liaison beaucoup plus importantes entre la dent et l'adapteur considérés, permettant un meilleur maintien sur tous les plans et dans les zones que l'on désire. Les efforts reçus par la dent peuvent être acceptés par de plus grandes surfaces en contact total avec leur support, ce qui permet de diminuer, de façon notable, les épaisseurs des parois des boîtiers de dents qui deviennent plus légers pour une même zone frontale à user.

Une autre caractéristique réside dans le fait que pour l'enlèvement des clavettes, il y a obligation d'une action volontaire qui est soit la frappe de celles-ci, soit le chauffage du matériau de remplissage durant une action maintenue jusqu'à complète extraction de la clavette, conditions que les pressions des matériaux extérieurs (terre, pierre, ...) ne peuvent pas remplir. Par la configuration des formes des clavettes, on peut gérer l'effort de l'enlèvement volontaire.

Ainsi, selon l'invention, le matériau spécifique assure une triple fonction:
- il peut lui-même assurer le maintien de la dent sur son adapteur sans utilisation de clavette ou insert.
- Dans le cas où il y a un usage de clavette ou insert, il assure le rôle de contre-clavette pour le maintien de la dent sur l'adapteur, et celui de la tenue de la clavette ou insert en position de travail.
- Dans tous les cas, il permet de réaliser un contact absolu entre dent et adapteur, sous la forme de coussins de contact, en investissant le jeu éventuel qui existe entre les faces respectives de la dent et celles de l'adapteur, ainsi que les logements volontairement prévus pour le recevoir. Ces logements peuvent s'établir sur n'importe quelles faces de l'emmanchement, toutes si on le désire.

L'invention vise un dispositif et procédé de liaison qui garde sa pleine valeur et reste applicable quelles que soient les formes adoptées pour le nez de l'adapteur et la cavité de la dent qui lui correspond, qu'il y ait ou non mise en oeuvre d'une clavette ou d'un insert et dans ce cas quelle que soit la position adoptée pour celle-ci ou celui-ci.

## Revendications

1. Dispositif de liaison de dents amovibles et d'adapteurs formés aux extrémités d'outils et réceptacles en usage sur les engins de travaux publics, ladite dent présentant une forme creuse intérieurement, ledit adapteur présentant une forme en nez autorisant son engagement dans ladite dent, caractérisé en ce que la dent (D) et l'adapteur (A) sont pourvus sur au moins une ou leurs faces de contact, et/ou dans leur épaisseur avec une ou des configurations additionnelles pour constituer des zones et volumes (D2b ,D4b, A4c, A4b) d'introduction, de logement, de retenue et d'enlèvement d'un matériau de remplissage (M) mis en place après montage préalable de la dent (D) sur l'adapteur (A) pour constituer au moins dans ces zones un contact absolu entre la dent et l'adapteur, permettant à ce dernier d'accepter les contraintes et sollicitations sur de plus grandes surfaces, le matériau étant sous forme fluide et capable d'auto-déformation, et en ce que la ou les configurations additionnelles sont situées à proximité et en liaison avec une ou des ouvertures d'introduction du matériau fluide pourvu (D2e, D4a, B2) dans la dent respectivement pourvu (A7c) dans l'adapteur, et en ce que le matériau (M) introduit en se solidifiant assure les fonctions de liaison et de maintien entre la dent (D) et l'adapteur (A), et en ce que la ou les configurations additionnelles des zones de logement destinées au remplissage et retenue du materiau ont pour fonction de fixer une ou des masses de matériau élastique d'un volume suffisant pour être capable de jouer en compression, en expansion, pendant la transmission à l'adapteur des contraintes mécaniques multi-directionnelles que reçoit la dent pendant son travail.

2. Dispositif selon la revendication 1, caractérisé en ce que la dent (D) et l'adapteur (A) sont conformés avec des cavités ou logements additionnels (D2b, D4b, A4c, A4b) situés en correspondance avec la ou les zones de réception du matériau de remplissage, lesdites cavités complémentaires permettant d'une part le positionnement d'une clavette (C) profilée montée sur la dent en traversant l'adapteur, et d'autre part leur remplissage par le matériau fluide (M) agissant alors en contre-clavette et assurant aussi le maintien de la clavette en complétant les zones de liaison et de retenue entre la dent et l'adapteur.

3. Dispositif selon les revendications 1 et 2, caractérisé en ce que les formes ou logements additionnelles recevant le matériau de remplissage M fluide sont disposés sur les diverses zones intermédiaires entre la dent (D) et l'adapteur (A) en assurant la retenue à étanchéité du matériau.

4. Dispositif selon l'une quelconque des revendications 1, 2 et 3, caractérisé en ce qu'il comprend une clavette (C) qui est positionnée solidarisée à la dent (D), mais avec jeu par rapport à l'adapteur (A), ledit matériau de remplissage (M) faisant office de contre-clavette et assurant sa tenue en service.

5. Dispositif selon l'une quelconque des revendications 1 à 4, caractérisé en ce que le matériau de remplissage (M) est un produit liquide à la température ambiante qui prendra l'état solide par polymérisation, tel qu'une résine à un seul ou deux composants ou bien une résine thermofusible solidifiée après refroidissement.

6. Dispositif selon l'une quelconque des revendications 1 à 4, caractérisé en ce que le matériau de remplissage (M) est un produit pâteux mis en place par pression puis durcissement par polymérisation ou vulcanisation, tel que résine moussante ou élastomère silicone.

7. Dispositif selon l'une quelconque des revendications 1 à 4, caractérisé en ce que le matériau de remplissage (M) est un produit solide tel qu'une vessie capable d'expansion par introduction d'un fluide liquide ou gazeux, dans une enveloppe en élastomère ou en caoutchouc.

8. Dispositif selon l'une quelconque des revendications 1 à 4, caractérisé en ce que le matériau de remplissage (M) est un produit sous forme pulvérulente ou granulée.

9. Dispositif selon l'une quelconque des revendications 2 à 8, caractérisé en ce que la dent (D1) et l'adapteur (A1) sont agencés pour autoriser l'engagement vertical ou sensiblement d'une clavette (C1), ladite clavette présentant une partie d'extrémité effilée (C1.a), susceptible de s'engager dans une ouverture (Dl.g) à pan incliné formé sur la face inférieure (D1.f) de la dent (D.1), ladite clavette présentant, au-dessus de son extrémité effilée, un évidement (C1.b) débouchant dans la partie supérieure de la clavette, en regard de l'ouverture (A1.a) formée sur la face supérieure de l'adapteur et (D1.d) formée sur la face supérieure de la dent, et en ce que ladite ouverture (Al.a) formée sur l'adapteur est d'une dimension supérieure à la section de la clavette, et en ce que la face supérieure (A1.c) du nez de l'adapteur présente un évidement (A1.d) autour de l'ouverture (A1.a), pour définir, après assemblage de l'ensemble, un volume (V1) susceptible de recevoir le matériau de remplissage.

10. Dispositif selon la revendication 8, caractérisé en ce que le volume (V1) est défini d'une part, par le volume (V1.a) formé dans la partie supérieure du nez, et d'autre part par le volume (V1.d) formé dans la partie intérieure de l'adapteur en regard de l'évidement (C1.b) établi sur la clavette.

11. Dispositif selon l'une quelconque des revendications 2 à 8, caractérisé en ce qu'il comprend une clavette (C2) disposée horizontalement et assurant la liaison entre la dent (D2) et l'adapteur (A2), ladite dent présentant sur ses faces latérales (D2.a) des orifices oblongs (D2.b) (D2.c) permettant l'engagement de la clavette, l'orifice (D2.c) ayant une forme conique pentée pour autoriser le maintien et la limite de positionnement de la clavette dont l'extrémité arrière (C2.a) est effilée de manière complémentaire, la face de dessus (D2.d) de ladite dent présentant une ouverture (D2.e) autorisant par l'extérieur la mise en place du matériau spécifique, et en ce que l'adapteur (A2) présente une large rainure transversale (A2.a) sur sa partie supérieure, autorisant le libre passage de la clavette (C2), tout en définissant un volume ou chambre de remplissage (V2) du matériau.

12. Dispositif selon la revendication 11, caractérisé en ce que la clavette (C2) présente, dans sa partie médiane, un évidement semi-circulaire (C2.b) disposé à l'aplomb de l'ouverture de remplissage formée sur la dent, ledit évidement contribuant à la liaison de l'ensemble.

13. Dispositif selon l'une quelconque des revendications 2 à 8, caractérisé en ce qu'un insert (C3) de liaison, entre la dent (D3) et l'adapteur (A3), est agencé et conformé avec des ouvertures destinées à être remplies par le matériau de remplissage.

14. Dispositif selon la revendication 13, caractérisé en ce que l'insert (C3.1) comprend, dans sa partie médiane, un rétrécissement (C3.1a) avec ouverture intermédiaire (C3.1b) autorisant le passage du matériau de remplissage, et en ce que une plaque de retenue (P) est disposée temporairement sur la face inférieure de la dent pour assurer le prépositionnement de l'insert, et faisant office de bouchon lors du remplissage du volume récepteur du matériau (M).

15. Dispositif selon la revendication 13, caractérisé en ce que l'insert (C3.2) comprend, dans sa partie médiane, une ou plusieurs gorges (C3.2a) autorisant le passage du matériau de remplissage, et en ce que une plaque de retenue (P) est disposée temporairement sur la face inférieure de la dent pour assurer le prépositionnement de l'insert, et faisant office de bouchon lors du remplissage du volume récepteur du matériau (M).

16. Dispositif selon l'une quelconque des revendications 1, 3 à 8, caractérisé en ce que l'adapteur (A4) présente, sur sa face supérieure, un évidement (A4.a) de grande dimension constituant une première zone de remplissage de matériau, la dent (D4) présentant un orifice (D4.a) d'introduction du matériau, en regard de l'évidement (A4.a), ainsi qu'une déformation intérieure formant une saillie en forme de crampon (D4.b), pénétrant partiellement dans l'espace formé par l'évidement (A4.a), l'ensemble définissant le volume de remplissage du matériau.

17. Dispositif selon la revendication 16, caractérisé en ce que la saillie en forme de crampon (D4.b) présente, sur sa face supérieure, un évidement (D4.c).

18. Dispositif selon l'une quelconque des revendications 1, 3 à 8, caractérisé en ce que l'adapteur (A4) présente, sur sa face supérieure, un bossage formant crampon en surélévation (A4.b) avec une couronne circulaire (A4.c) autorisant le remplissage du matériau, la dent (D4) présentant, dans sa partie supérieure, une surélévation formant chapeau (D4.d), coiffant le bossage (A4.b) en laissant un volume pour le remplissage de matériau de liaison, ledit chapeau étant ouvert à sa partie supérieure.

19. Dispositif selon l'une quelconque des revendications 1, à 8, caractérisé en ce que la dent et l'adapteur présentent des configurations additionnelles en creux et bossages complémentaires, définissant un ou des volumes intérieurs avec des ouvertures d'accès pour permettre le remplissage du matériau (M).

20. Dispositif selon la revendication 1 dans son application à un bouclier solidarisé à une lèvre de godet (LG), celle-ci comprenant, sur sa face supérieure, une portée circulaire (LG1) s'insérant dans une cavité intérieure (B1) de grandes dimensions et volumes formées sur la partie supérieure du bouclier, ladite cavité étant en liaison avec un orifice (B2) autorisant l'introduction du matériau de remplissage, ladite cavité étant profilée pour autoriser l'introduction d'une clavette traversante circulaire à section dégressive, ladite clavette présentant un talon (C5a) s'engageant dans un évidement formé dans la cavité.

21. Dispositif selon la revendication 2, caractérisé en ce que la clavette présente dans sa partie médiane une gorge circulaire avec des parties d'extrémité formant biseau pour sectionner le matériau de remplissage lors de l'enlèvement de la clavette.

22. Dispositif selon l'une quelconque des revendications 2 à 8, caractérisé en ce que la liaison entre la dent (D7) et l'adapteur (A7) s'effectue à l'aide d'une clavette (C7) formant cavalier, l'ensemble étant agencé pour permettre l'introduction, la retenue du matériau de liaison à travers trois orifices d'introduction disposés dans le même plan et permettant la formation de zones d'ancrage entre la dent et l'adapteur dans des plans différents.

23. Dispositif selon la revendication 22, caractérisé en ce que la dent (D7) présente deux oreilles latérales (D7.1) d'épaisseur plus importante que la partie de liaison (D7.2) avec le corps de la dent, l'adapteur présentant un nez profilé (A7.1) de section inférieure au corps (A7.2) de l'adapteur, ledit nez présentant dans son épaisseur des zones d'évidement formant logements (A7a, A7b, A7c) l'un dans un plan supérieur sensiblement horizontal, et les autres dans des plans latéraux verticaux de part et d'autre du nez, les logements latéraux se trouvant en regard des parties d'oreilles et des zones de liaison de la dent en définissant des cavités ou espaces (F) permettant l'engagement de la clavette-cavalier (C7) par ses branches (C7a, C7b),
et en ce que des cheminées (CH1, CH2, CH3) sont formées à partir de la partie supérieure de la dent et du corps de l'adapteur, en débouchant dans les cavités ou espaces (F) et permettant l'introduction et la retenue du matériau de remplissage,
et en ce que la clavette-cavalier présente, entre ses deux branches et sur sa face inférieure, un bossage (C7c) pénétrant dans le logement supérieur (A7a) formé sur le nez de l'adapteur.

24. Dispositif selon la revendication 23, caractérisé en ce que la clavette-cavalier ne débouche pas dans la partie inférieure de l'adapteur, et présente en outre sa partie supérieure (C7e) profilée pour s'adapter au dos de l'adapteur dans un plan de continuité avec les profilés correspondants supérieurs de la dent et de l'adapteur, et en ce que, à l'endroit de formation de ses branches, la clavette-cavalier présente un évidement (C7d) permettant l'introduction d'un outil pour son dégagement.

25. Procédé de liaison entre des dents et des adapteurs, selon l'une quelconque des revendications 1 à 19, caractérisé en ce que :
- on place la dent (D, D1, D2, D3, D4) sur son adapteur (A, A1, A2, A3, A4) en contact avec ce dernier, donc dans sa position finale, sans recherche d'un quelconque niveau d'emmanchement,
- on dispose par versement, à l'état liquide ou pâteux, le matériau de remplissage entre la dent et l'adapteur, dans le ou les volumes définis, ledit matériau spécifique étant capable d'auto-déformation pour pouvoir investir le ou les volumes attribués, quels que soient ces volumes, puis s'y retrouver à l'état solide, prêt à assurer les fonctions de liaison et de maintien entre la dent et l'adapteur et en amortissant les contraintes mécaniques multidirectionnelles engendrées lors du travail de la dent.

26. Procédé selon la revendication 25 caractérisé en ce que
- on utilise une clavette entre la dent et l'adapteur, la clavette (C, C1, C2, C3) devenant solidaire de la dent, pouvant toucher ou non l'adapteur, vis-à-vis duquel il ne lui est demandé aucune précision.
- on dispose par versement, à l'état liquide ou pâteux, le matériau de remplissage entre l'adapteur la dent et la clavette, dans le ou les volumes définis, ledit matériau spécifique étant capable d'auto-déformation pour pouvoir investir le ou les volumes attribués, quels que soient ces volumes et leurs formes, puis s'y retrouver à l'état solide, prêt à assurer les fonctions de liaison et de maintien entre la dent et l'adapteur et en amortissant les contraintes mécaniques multidirectionnelles engendrées lors du travail de la dent.

27. Procédé de liaison entre des dents et des adapteurs, selon la revendication 25, caractérisé en ce que :
- on introduit un insert avant ou pendant la mise en place du matériau spécifique, l'insert assurant la fonction d'armature du matériau spécifique qui, lui, se comporte en clavette lequel insert permettant l'élimination du volume de retenue de la dent sur l'adapteur lors du besoin de changement.

28. Procédé selon l'une quelconque des revendications 25 26 et 27 caractérisé en ce que le démontage de l'ensemble dent-adapteur s'effectue par une opération de chauffage destiné à rendre fluide ou pâteux le matériau de remplissage pour libérer la dent et l'adapteur, ou la dent, la clavette et l'adapteur, ou par une action mécanique à force.

## Patentansprüche

1. Verbindungsvorrichtug von abnehmbaren Zähnen und von Adaptern an den Enden von Werkzeugen und Behältnissen, die bei Tiefbaumaschinen zum Einsatz kommen, wobei der Zahn innen hohl ist und der Adaptor eine nasenartige Form aufweist, die das Einführen in den Zahn ermöglicht, dadurch gekennzeichnet, daß der Zahn (D) und der Adapter (A) auf mindestens einer ihrer Berührungsflächen und/oder in der Dicke mit einer bzw. mehreren Zusatzkonfigurationen versehen sind, um Zonen und Volumina (D2b, D4b, A4c, A4b) zum Einführen, Lagern, Zurückhalten und Entfernen eines Füllmaterials (M) zu bilden, das nach der vorherigen Montage des Zahns (D) am Adapter (A) eingebracht wurde, um mindestens in diesen Zonen einen völligen Kontakt zwischen dem Zahn und dem Adapter herzustellen, so daß letzterer die Kräfte und Beanspruchungen auf größeren Flächen tolerieren kann, wobei das Material in flüssiger Form vorliegt und selbstverformbar ist, und dadurch gekennzeichnet, daß die Zusatzkonfigurationen in der Nähe und in Verbindung mit einer bzw. mehreren Öffnungen für die Eingabe des Flüssigmaterials im Zahn (D2e, D4a, B2) bzw. im Adapter (A7c) angeordnet sind, und dadurch gekennzeichnet, daß das eingeführte Material beim Verfestigen die Verbindungs- und Haltefunktionen zwischen dem Zahn (D) und dem Adapter (A) gewährleistet, und dadurch gekennzeichnet, daß die Zusatzkonfiguration(en) der Aufnahmezonen für das Füllen und Zurückhalten des Materials die Aufgabe hat/haben, eine bzw. mehrere elastische Materialmassen mit einem ausreichenden Volumen zu fixieren, um in der Lage zu sein, sich während der Adapterübertragung der in mehrere Richtungen wirkenden mechanischen Kräfte, die der Zahn während der Arbeit aufnimmt, zu verdichten oder auszudehnen.

2. Vorrichtung nach Anspruch 1, dadurch gekennzeichnet, daß der Zahn (D) und der Adapter (A) in Entsprechung zu dem bzw. den Aufnahmebereich(en) für das Füllmaterial zusätzliche Vertiefungen bzw. Lagerungen (D2b, D4b, A4c, A4b) aufweisen, wobei diese zusätzlichen Vertiefungen einerseits die Positionierung eines am Zahn angebrachten und den Adapter durchquerenden profilierten Keils (C) und andererseits ihr Auffüllen durch das flüssige Material (M) ermöglichen, das dabei als Gegenkeil wirkt und durch Ergänzung der Verbindungs- und Rückhaltezonen zwischen Zahn und Adapter auch den Halt des Keils gewährleistet.

3. Vorrichtung nach den Ansprüchen 1 und 2, dadurch gekennzeichnet, daß die zusätzlichen Formen bzw. Lagerungen für die Aufnahme des flüssigen Füllmaterials (M) an verschiedenen Zwischenzonen zwischen dem Zahn (D) und dem Adapter (A) angeordnet sind und dabei unter Dichtigkeit das Zurückhalten des Materials gewährleisten.

4. Vorrichtung nach einem der Ansprüche 1, 2 und 3, dadurch gekennzeichnet, daß sie einen Keil (C) umfaßt, der mit dem Zahn (D) fest verbunden ist, aber gegenüber dem Adapter (A) ein Spiel aufweist, wobei das Füllmaterial (M) als Gegenkeil dient und im Betrieb seinen Halt gewährleistet.

5. Vorrichtung nach einem der Ansprüche 1 - 4, dadurch gekennzeichnet, daß es sich bei dem Füllmaterial (M) um ein Flüssigprodukt mit Raumtemperatur handelt, das sich wie ein Ein- oder Zwei-Komponenten-Harz oder wie ein nach Abkühlung erstarrtes warmschmelzendes Harz durch Polymerisation verfestigt.

6. Vorrichtung nach einem der Ansprüche 1 - 4, dadurch gekennzeichnet, daß es sich bei dem Füllmaterial (M) um ein pastöses Produkt handelt, das wie ein aufschäumendes Harz oder ein Silikonelastomer durch Druck und dann Härtung durch Polymerisation bzw. Vulkanisiation eingebracht wird.

7. Vorrichtung nach einem der Ansprüche 1 - 4, dadurch gekennzeichnet, daß es sich bei dem Füllmaterial (M) um ein festes Produkt wie z.B. eine Blase handelt, die sich durch Einleitung eines flüssigen oder gasförmigen Mediums in eine Hülle aus Elastomer oder Gummi ausdehnen kann.

8. Vorrichtung nach einem der Ansprüche 1 - 4, dadurch gekennzeichnet, daß es sich bei dem Füllmaterial (M) um ein pulver- oder körnchenförmiges Produkt handelt.

9. Vorrichtung nach einem der Ansprüche 2 - 8, dadurch gekennzeichnet, daß der Zahn (D1) und der Adapter (Al) so ausgebildet sind, um das senkrechte bzw. ziemlich genau senkrechte Einführen eines Keils (C1) zu ermöglichen, wobei der Keil einen spitz zulaufenden Endteil (Cl.a) aufweist, der geeignet ist, in eine schrägkantige Öffnung (D1.g) an der unteren Seite (D1.f) des Zahns (D.1) einzugreifen, wobei der Keil oberhalb seines zugespitzten Endes eine in den oberen Teil des Keils gegenüber der Offnung (Al.a) an der Oberseite des Adapters und (D1.d) an der Oberseite des Zahns ausführende Aussparung (C1.b) aufweist, und dadurch gekennzeichnet, daß diese am Adapter ausgebildete Öffnung (A1.a) größer ist als der Querschnitt des Keils, und dadurch gekennzeichnet, daß die Oberseite (A1.c) der Adapternase um die Öffnung (A1.a) herum eine Aussparung (A1.d) aufweist, um nach der Montage des ganzen Systems ein Volumen (V1) zu umschreiben, das für die Aufnahme des Füllmaterials geeignet ist.

10. Vorrichtung nach Anspruch 8, dadurch gekennzeichnet, daß das Volumen (V1) einerseits durch das Volumen (V1.a) im oberen Teil der Nase und andererseits durch das Volumen (V1.d) im unteren Teil des Adapters gegenüber der Aussparung (C1.b) am Keil definiert wird.

11. Vorrichtung nach einem der Ansprüche 2 - 8, dadurch gekennzeichnet, daß sie einen waagrecht verlaufenden Keil (C2) umfaßt und die Verbindung zwischen dem Zahn (D2) und dem Adapter (A2) herstellt, wobei der Zahn an den Seitenflächen (D2.a) längliche Öffnungen (D2.b) (D2.c) aufweist, die das Einführen des Keils ermöglichen, und die Öffnung (D2.c) eine schräge konische Form für den Halt und die Lagebegrenzung des Keils besitzt, dessen hinteres Ende (C2.a) in ergänzender Weise spitz zuläuft, während die Oberseite (D2.d) des besagten Zahns eine Öffnung (D2.e) aufweist, die das Einbringen des spezifischen Materials von außen ermöglicht, und dadurch gekennzeichnet, daß der Adapter (A2) am oberen Teil eine breite Querrinne (A2.a) aufweist, die die unbehinderte Durchführung des Keils (C2) ermöglicht und dabei gleichzeitig ein Volumen bzw. eine Kammer für das Auffüllen (V2) mit dem Material umschreibt.

12. Vorrichtung nach Anspruch 11, dadurch gekennzeichnet, daß der Keil (C2) am mittleren Teil eine halbkreisförmige Aussparung (C2.b) aufweist, die lotrecht zur Füllöffnung am Zahn angeordnet ist, wobei die Aussparung zur Verbindung des gesamten Systems beiträgt.

13. Vorrichtung nach einem der Ansprüche 2 - 8, dadurch gekennzeichnet, daß zwischen dem Zahn (D3) und dem Adapter (A3) ein Verbindungseinsatz (C3) angeordnet und mit Öffnungen für das Füllen mit dem Füllmaterial ausgebildet ist.

14. Vorrichtung nach Anspruch 13, dadurch gekennzeichnet, daß der Einsatz (C3.1) in seinem mittleren Teil eine Verengung (C3.1a) mit einer Zwischenöffnung (C3.1b) für den Durchlauf des Füllmaterials aufweist und daß auf der Unterseite des Zahns vorübergehend eine Rückhalteplatte angeordnet ist, um die Vorpositionierung des Einsatzes zu gewährleisten und beim Auffüllen des Aufnahmevolumens mit dem Material (M) als Verschluß zu dienen.

15. Vorrichtung nach Anspruch 13, dadurch gekennzeichnet, daß der Einsatz (C3.2) im mittleren Teil eine oder mehrere Nuten (C3.2a) für den Durchlauf des Füllmaterials umfaßt und daß auf der Unterseite des Zahns vorübergehend eine Rückhalteplatte angeordnet ist, um die Vorpositionierung des Einsatzes zu gewährleisten und beim Auffüllen des Aufnahmevolumens mit dem Material (M) als Verschluß zu dienen.

16. Vorrichtung nach einem der Ansprüche 1, 3 - 8, dadurch gekennzeichnet, daß der Adapter (A4) auf der Oberseite eine groß bemessene Aussparung (A4.a) aufweist, die eine erste Materialauffüllzone bildet, wobei der Zahn (D4) gegenüber der Aussparung (A4.a) eine Materialeinfüllöffnung (D4.a) sowie eine innere Verformung aufweist, die einen spornartigen Vorsprung (D4.b) bildet, der teilweise in den durch die Aussparung (A4.a) geschaffenen Raum eindringt, wobei insgesamt das Materialfüllvolumen umschrieben wird.

17. Vorrichtung nach Anspruch 16, dadurch gekennzeichnet, daß der spornartige Vorsprung (D4.b) auf der Oberseite eine Aussparung (D4.c) aufweist.

18. Vorrichtung nach einem der Ansprüche 1, 3 - 8, dadurch gekennzeichnet, daß der Adapter (A4) auf der Oberseite einen spornartig überhöhten Buckel (A4.b) mit einem kreisförmigen Kranz (A4.c) für das Auffüllen des Materials aufweist, wobei der Zahn (D4) im oberen Teil eine den Buckel (A4.b) überdeckende kappenbildende Überhöhung (D4.d) aufweist und dabei ein Volumen für das Einfüllen des Verbindungsmaterials freiläßt, wobei die Kappe am oberen Teil geöffnet ist.

19. Vorrichtung nach einem der Ansprüche 1, 3 - 8, dadurch gekennzeichnet, daß der Zahn und der Adapter zusätzliche Vertiefungen und Vorsprünge aufweisen, die einen oder mehrere Innenvolumen mit Zugangsöffnungen für das Einfüllen des Materials (M) umschreiben.

20. Vorrichtung nach Anspruch 1 in seiner Anwendung auf einen Schild, der mit einer Löffellippe (LG) fest verbunden ist, die auf der Oberseite eine kreisförmige Auflagefläche (LG1) besitzt, die sich in eine innere Aushöhlung (B1) mit großen Abmessungen und Volumina am oberen Teil des Schildes einfügt, wobei die Aushöhlung mit einer Öffnung (B2) in Verbindung steht, die die Einführung des Füllmaterials ermöglicht und so profiliert ist, um die Einführung eines kreisförmigen durchquerenden Keils mit abnehmendem Querschnitt zu ermöglichen, wobei der Keil einen Absatz (C5a) aufweist, der in eine Aussparung in der Aushöhlung eingreift.

21. Vorrichtung nach Anspruch 2, dadurch gekennzeichnet, daß der Keil in seinem mittleren Teil eine kreisförmige Nut mit abgefasten Endteilen aufweist, um das Füllmaterial beim Entfernen des Keils zu durchtrennen.

22. Vorrichtung nach einem der Ansprüche 2 - 8, dadurch gekennzeichnet, daß die Verbindung zwischen dem Zahn (D7) und dem Adapter (A7) mittels eines klammerbildenden Keils (C7) erfolgt, wobei das Ganze so ausgebildet ist, um das Einführen und Zurückhalten des Verbindungsmaterials durch drei Eingabeöffnungen zu ermöglichen, die auf der gleichen Ebene angeordnet sind und die Bildung von Verankerungszonen zwischen dem Zahn und dem Adapter auf verschiedenen Ebenen ermöglichen.

23. Vorrichtung nach Anspruch 22, dadurch gekennzeichnet, daß der Zahn (D7) zwei seitliche Ohren (D7.1) aufweist, die dicker sind als der Verbindungsteil (D7.2) mit dem Zahnkörper, wobei der Adapter eine Profilnase (A7.1) mit geringerem Querschnitt als der Adapterkörper (A7.2) aufweist, während die Nase in der Materialdicke lagerbildende Aussparungszonen (A7a, A7b, A7c) besitzt - eine auf einer ziemlich genau waagrechten höheren Ebene, und die anderen auf senkrechten seitlichen Ebenen beiderseits der Nase -, wobei sich die seitlichen Lagerungen gegenüber den Ohrenteilen und den Verbindungszonen des Zahns befinden und dabei Vertiefungen bzw. Räume (F) umschreiben, die das Einführen des Klammerkeils (C7) durch die Schenkel (C7a, C7b) ermöglichen, und dadurch gekennzeichnet, daß ausgehend vom oberen Teil des Zahns und des Adapterkörpers Schächte (CH1, CH2, CH3) gebildet sind, die in die Vertiefungen bzw. Räume (F) münden und das Eingeben und Zurückhalten des Füllmaterials ermöglichen, und dadurch gekennzeichnet, daß der Klammerkeil zwischen den beiden Schenkeln und an der Unterseite einen Buckel (C7c) aufweist, der in den oberen Lagersitz (A7a) an der Nase des Adapters eindringt.

24. Vorrichtung nach Anspruch 23, dadurch gekennzeichnet, daß der Klammerkeil nicht in den unteren Teil des Adapters mündet und außerdem am oberen Teil (C7e) so profiliert ist, daß er sich am Rücken des Adapters in einer fortlaufenden Ebene mit den entsprechenden oberen Profilen des Zahns und des Adapters einpaßt, und dadurch gekennzeichnet, daß der Klammerkeil am Ausgangspunkt der Schenkel eine Aussparung (C7d) für die Einführung eines Werkzeugs zum Herauslösen aufweist.

25. Verbindungsverfahren zwischen Zähnen und Adaptern nach einem der Ansprüche 1 - 19, dadurch gekennzeichnet, daß:
- der Zahn (D, D1, D2, D3, D4) ohne Bemühen um irgendeine Aufpreßebene bis zur Herstellung des Kontaktes, d.h. bis zur Endposition, auf den Adapter (A, A1, A2, A3, A4) gesetzt wird,
- das Füllmaterial im flüssigen oder pastösen Zustand zwischen den Zahn und den Adapter in das bzw. die definierte(n) Volumen (Volumina) gegossen wird, wobei das spezifische Material eigenverformbar ist, um das bzw. die zugewiesenen Volumen (volumina) unabhängig von den Volumina ausfüllen zu können, und dann in festem Zustand bereit ist, die Verbindungs- und Haltefunktionen zwischen Zahn und Adapter zu gewährleisten und dabei die in mehrere Richtungen wirkenden mechanischen Krafteinwirkungen zu dämpfen, die bei der Arbeit des Zahns auftreten.

26. Verfahren nach Anspruch 25, dadurch gekennzeichnet, daß:
- zwischen Zahn und Adapter ein Keil verwendet wird, wobei der Keil (C, C1, C2, C3) mit dem Zahn eine feste Verbindung eingeht und dabei den Adapter, gegenüber dem keine Präzision verlangt wird, berühren kann oder auch nicht.
- das Füllmaterial im flüssigen oder pastösen Zustand zwischen den Adapter, den Zahn und den Keil in das bzw. die definierten Volumen (Volumina) gegossen wird, wobei das spezifische Material eigenverformbar ist, um das bzw. die zugewiesenen Volumen (Volumina) unabhängig von den Volumina und Formen ausfüllen zu können, und dann in festem Zustand bereit ist, die Verbindungs- und Haltefunktionen zwischen Zahn und Adapter zu gewährleisten und dabei die in mehrere Richtungen wirkenden mechanischen Krafteinwirkungen zu dämpfen, die bei der Arbeit des Zahns auftreten.

27. Verbindungsverfahren zwischen Zähnen und Adaptern nach Anspruch 25, dadurch gekennzeichnet, daß vor oder während des Einbringens des spezifischen Materials ein Einsatz eingeführt wird, wobei der Einsatz als Gerüst für das spezifische Material fungiert, das sich wie ein Keil verhält, wobei der Einsatz bei Wechselbedarf die Entfernung des Rückhaltevolumens des Zahns auf den Adapter ermöglicht.

28. Verfahren nach einem der Ansprüche 25, 26 und 27, dadurch gekennzeichnet, daß der Ausbau des Zahn/Adapter-Systems durch Erwärmung erfolgt, wobei das Füllmaterial flüssig oder pastös wird, um den Zahn und den Adapter bzw. den Zahn, den Keil und den Adapter freizubekommen, oder durch mechanische Krafteinwirkung.

## Claims

1. Device for bonding removable teeth and adapters on the ends of tools and receptacles used on civil engineering plant, said tooth having a hollow internal shape, said adapter having a tip shape allowing it to fit into said tooth, characterised in that the tooth (D) and adapter (A) have, on at least one of their contact surfaces and/or in their thickness, one or more additional configurations to constitute (D2b, D4b, A4c, A4b) areas and spaces for filling, accommodating, containing and removing a filler material (M) applied after prior assembly of the tooth (D) on the adapter (A) in order to provide, at least in these areas, absolute contact between the tooth and adapter thus allowing the latter to withstand the stresses and strains over larger surface areas, the material being of fluid form and capable of deformation and in that the additional configuration(s) is/are located near and in connection with one or more opening(s) for filling the fluid material provided (D2e, D4a, B2) in the tooth or provided (A7c) in the adapter and in that the filler material (M), as it solidifies, performs the functions of bonding and securing the tooth (D) and the adapter (A) and in that the additional configuration(s) of the recess areas intended for filling and containing the material has/have the function of fixing one or more masses of elastic material of a volume sufficient to be capable of compression and expansion during transmission to the adapter of multidirectional mechanical stresses exerted on the tooth during its operation.

2. Device as claimed in claim 1 characterised in that the tooth (D) and adapter (A) are made with additional cavities or recesses (D2b, D4b, A4c, A4b) located in relation to the area(s) for receiving the filler material, said matching cavities allowing, on the one hand, positioning of a shaped key (C) mounted on the tooth that goes through the adapter and, on the other hand, their filling by the fluid material (M) which then acts as a tightening key and also secures the key by filling the bonding and containing areas between the tooth and the adapter.

3. Device as claimed in claims 1 and 2 characterised in that the additional shapes or recesses containing the fluid filler material (M) are arranged in the various intermediate areas between the tooth (D) and adapter (A) to ensure sealed containment of the material.

4. Device as claimed in any of claims 1, 2 and 3 characterised in that it comprises a key (C) which is positioned connected to the tooth (D) but with clearance relative to the adapter (A), said filler material (M) acting as a tightening key and securing it during service.

5. Device as claimed in any of claims 1 to 4 characterised in that the filler material (M) is a product that is liquid at room temperature and which solidifies by polymerisation such as a resin with one or two components or a heatsetting resin that solidifies after cooling.

6. Device as claimed in any of claims 1 to 4 characterised in that the filler material (M) is a paste product applied by pressure and then hardened by polymerisation or curing such as a foam resin or silicone elastomer.

7. Device as claimed in any of claims 1 to 4 characterised in that the filler material (M) is a solid product such as a bladder capable of expansion by filling a liquid or gaseous fluid into an envelope made of plastic or rubber.

8. Device as claimed in any of claims 1 to 4 characterised in that the filler material (M) is a product in powder or granule form.

9. Device as claimed in any of claims 2 to 8 characterised in that tooth (D1) and adapter (Al) are designed to allow vertical or essentially vertical engagement of a key (C1), said key having a tapered end part (C1.a) capable of fitting in an opening (D1.g) with a bevel made on the lower surface (D1.f) of tooth (D.1), said key having, above its tapered end, hollow (C1.b) that opens out into the top of the key opposite opening (A1.a) made on the upper surface of the adapter and opening (D1.d) made on the upper surface of the tooth and in that said opening (A1.a) made on the adapter is larger than the cross-section of the key and in that the upper surface (A1.c) of the adapter tip has a hollow (A1.d) around opening (A1.a) in order to define, after joining of the assembly, a space (V1) capable of containing the filler material.

10. Device as claimed in claim 8 characterised in that space (V1) is defined on the one hand by space (V1.a) formed in the upper part of the tip and, on the other hand, by space (V1.d) formed in the internal part of the adapter opposite hollow (C1.b) on the key.

11. Device as claimed in any of claims 2 to 8 characterised in that it comprises a key (C2) positioned horizontally which ensures bonding between tooth (D2) and adapter (A2), said tooth having, on its lateral surfaces (D2.a), oblong openings (D2.b) (D2.c) which allow fitting of the key, opening (D2.c) having a conical shape with a slope to ensure securing and the positioning limit of the key of which the rear end (C2.a) has a matching taper, top surface (D2.d) of said tooth having an opening (D2.e) to allow, from the outside, pouring of the special-purpose material and in that adapter (A2) has a large crosswise groove (A2.a) on its upper part to allow free passage of key (C2) and to define a filling space or chamber (V2) for the material.

12. Device as claimed in claim 11 characterised in that key (C2) has, in its middle part, a semi-circular hollow (C2.b) placed at right angles to the filler opening formed on the tooth, said hollow contributing to bonding of the assembly.

13. Device as claimed in any of claims 2 to 8 characterised in that a bonding insert (C3) between tooth (D3) and adapter (A3) is designed and shaped with openings intended to be filled by the filler material.

14. Device as claimed in claim 13 characterised in that insert (C3.1) has, in its middle part, a waisted section (C3.1a) with an intermediate opening (C3.1b) allowing passage of the filler material and in that a retention plate (P) is temporarily fitted on the lower surface of the tooth to ensure initial positioning of the insert and acts as a plug when the space that receives material (M) is filled.

15. Device as claimed in claim 13 characterised in that insert (C3.2) has, in its middle part, one or more grooves (C3.2a) allowing passage of the filler material and in that a retention plate (P) is temporarily fitted on the lower surface of the tooth to ensure initial positioning of the insert and acts as a plug when the space that receives material (M) is filled.

16. Device as claimed in any of claims 1, 3 to 8 characterised in that adapter (A4) has, on its upper surface, a very large hollow (A4.a) providing a first area for filling the material, tooth (D4) having an opening (D4.a) for filling the material opposite hollow (A4.a) as well as an internal shape forming a projection in the form of a spike (D4.b) which partially penetrates into the space formed by hollow (A4.a), this assembly defining the space for filling the material.

17. Device as claimed in claim 16 characterised in that the projection in the form of a spike (D4.b) has, on its upper surface, a hollow (D4.c).

18. Device as claimed in any of claims 1, 3 to 8 characterised in that adapter (A4) has, on its upper surface, a raised boss (A4.b) with a circular crown (A4.c) to allow filling of the material, tooth (D4) having, on its upper part, an elevated area forming a cap (D4.d) covering boss (A4.d) leaving a space for filling the bonding material, the upper part of said cap being open.

19. Device as claimed in any of claim 1, 3 to 8 characterised in that the tooth and adapter have additional valley and peak configurations defining internal space(s) with access openings to allow filling of material (M).

20. Device as claimed in claim 1 in its application to a shield joined to a bucket lip (LG), the latter having, on its upper surface, a circular bearing surface (LG1) that can be inserted into an internal cavity (B1) of large size and volume formed on the upper part of the shield, said cavity communicating with an opening (B2) which allows filling of the filler material, said cavity being shaped to allow the insertion of a circular through key of tapered cross section, said key having a heel (C5a) that fits in a hollow formed in the cavity.

21. Device as claimed in claim 2 characterised in that the key has, in its middle part, a circular groove with end parts forming a bevel to slice the filler material when the key is removed.

22. Device as claimed in any of claims 2 to 8 characterised in that the bond between tooth (D7) and adapter (A7) is made by means of key (C7) forming a U-shaped piece, the assembly being designed to allow filling and containment of the bonding material through three filler openings made in the same plane and allowing the formation of anchoring areas between the tooth and adapter in different planes.

23. Device as claimed in claim 22 characterised in that tooth (D7) has two lateral lugs (D7.1) that are thicker than the part for bonding (D7.2) with the body of the tooth, the adapter having a profiled tip (A7.1) of smaller cross-section than the body (A7.2) of the adapter, said tip having, in its thickness, hollowed areas forming recesses (A7a, A7b, A7c), one being in an upper essentially horizontal plane and the others in vertical lateral planes either side of the tip, the lateral recesses being located opposite the lug parts and the areas where the tooth is bonded thus defining cavities or spaces (F) allowing fitting of the U-shaped key (C7) by its arms (C7a, C7b) and in that shafts (CH1, CH2, CH3) are formed on the basis of the upper part of the tooth and the body of the adapter, these shafts opening out in the cavities or spaces (F) and allowing filling and containment of the filler material, and in that the U-shaped key has, between its two arms and on its lower surface, a boss (C7c) that penetrates into the upper recess (A7a) formed on the adapter tip.

24. Device as claimed in claim 23 characterised in that the U-shaped key does not open out into the lower part of the adapter and also has its upper part (C7e) shaped to match the back of the adapter in a continuation plane with the corresponding upper shapes of the tooth and adapter and in that, at the point where its arms are formed, the U-shaped key has a hollow (C7d) making it possible to insert a tool in order to release the key.

25. Process for bonding teeth and adapters as claimed in any of claims 1 to 19 characterised in that:
- The tooth (D, D1, D2, D3, D4) is placed on its adapter (A, A1, A2, A3, A4) in contact with the latter, i.e. in its final position, without any attempt to obtain any particular fitting level,
- The filler material in a liquid or paste state is applied by pouring it between the tooth and adapter into the space(s) defined, said special-purpose material being capable of deformation so that it can fill the space(s) provided for it, regardless of these spaces, and remain in them in the solid state ready to fulfil the bonding and securing functions between the tooth and adapter while absorbing multidirectional stresses exerted during operation of the tooth.

26. Process as claimed in claim 25 characterised in that:
- A key is used between the tooth and the adapter, the key (C, C1, C2, C3) becoming joined to the tooth and may or may not touch the adapter with respect to which there is no accuracy requirement.
- The filler material in a liquid or paste state is applied by pouring it between the adapter, tooth and key into the space(s) defined, said special-purpose material being capable of deformation so that it can fill the space(s) provided for it, regardless of these spaces and their shapes, and remain in them in the solid state ready to fulfil the the bonding and securing functions between the tooth and adapter while absorbing multidirectional stresses exerted during operation of the tooth.

27. Process for bonding teeth and adapters as claimed in claim 25 characterised in that:
- An insert is inserted before or during application of the special-purpose material, the insert fulfilling the function of reinforcing the special-purpose material which acts as a key, said insert making it possible to remove the material from the space for retaining the tooth on the adapter when there is a need to change the tooth.

28. Process as claimed in any of claims 25, 26 and 27 characterised in that disassembly of the tooth-adapter assembly is obtained by a heating operation intended to change the filler material to a fluid or paste state in order to release the tooth and adapter or the tooth, key and adapter or by the force of a mechanical action.
